# EUROPÄISCHE PATENTSCHRIFT

(11) **EP 1 831 325 B1**
(45) Veröffentlichungstag und Bekanntmachung des Hinweises auf die Patenterteilung: **02.03.2016**
(21) Anmeldenummer: 05825297.4
(22) Anmeldetag: 22.12.2005
(51) Int. Cl.: C09J 153/00, C08F 293/00, C08L 53/00, C09D 153/00

(54) **HITZEAKTIVIERBARES KLEBEBAND FÜR FPCB-VERKLEBUNGEN**
HEAT-ACTIVATABLE ADHESIVE TAPE FOR FLEXIBLE PRINTED CIRCUIT BOARD (FPCB) BONDINGS
RUBAN ADHESIF THERMOACTIVABLE POUR LE COLLAGE DE CARTES A CIRCUITS IMPRIMES SOUPLES

(30) Priorität: 23.12.2004 DE 102004063329; 23.12.2004 DE 102004063328
(43) Veröffentlichungstag der Anmeldung: 12.09.2007
(73) Patentinhaber: tesa SE, 22848 Norderstedt (DE)
(72) Erfinder: HUSEMANN, Marc, 22605 Hamburg (DE)
(86) Internationale Anmeldenummer: PCT/EP2005/057130
(87) Internationale Veröffentlichungsnummer: WO 2006/069975

(56) Entgegenhaltungen:
- EP-A- 0 921 170
- EP-A- 1 008 640
- EP-A- 1 544 274
- WO-A-02/10308
- WO-A-02/10309
- WO-A-2004/067665
- US-A- 5 403 658
- US-A1- 2004 054 081

## Beschreibung

Die Erfindung betrifft ein hitzeaktivierbares Klebeband zur Verklebung von Leiterplatten, insbesondere flexiblen und/oder gedruckten Leiterplatten, ganz besonders "Flexible Printed Circuit Boards" (FPCBs).

Klebebänder sind im Zeitalter der Industrialisierung weitverbreitete Verarbeitungshilfsmittel. Insbesondere für den Einsatz in der elektronischen Industrie werden an Klebebänder sehr hohe Anforderungen gestellt.
Zur Zeit besteht in der Elektronik Industrie ein Trend zu immer schmalere, leichteren und schnelleren Bauteilen. Um dies zu erreichen, werden an den Herstellungsprozess immer größere Anforderungen gestellt. Dies betrifft auch die so genannten Flexible Printed Circut Boards (FPCBs), die sehr häufig zur elektrischen Kontaktierung von IC Chips oder konventionellen Printed Circuit Boards eingesetzt werden.

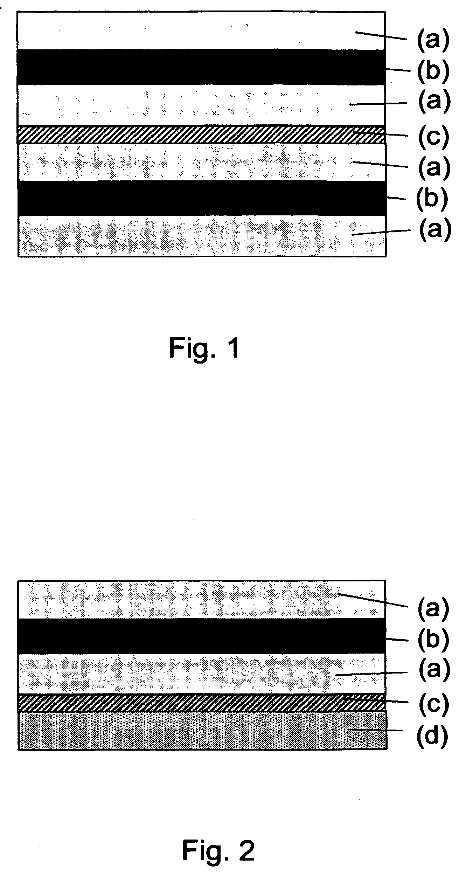

Flexible gedruckte Leiterplatten (Flexible Printed Circuit Boards, FPCBs) sind daher in einer Vielzahl von elektronischen Geräten, wie z.B. Handys, Autoradios, Computern, etc. vertreten. FPCBs bestehen in der Regel aus Schichten von Kupfer (b) und Polyimid (a), wobei gegebenenfalls Polyimid mit der Kupferfolie verklebt wird.
Für den Einsatz der FPCBs werden diese verklebt, wobei in einer Auslegung FPCBs auch miteinander verklebt werden. In diesem Fall wird Polyimidfolie auf Polyimidfolie verklebt (Figur 1).

Für die Verklebung von FPCBs werden in der Regel hitzeaktivierbare Klebebänder (c) eingesetzt, die keine flüchtigen Bestandteile freisetzen und auch in einem hohen Temperaturbereich eingesetzt werden können.
In einer Alternative werden leicht tackige ("anfassklebrige") hitzeaktivierbare Klebemassen eingesetzt. Diese Klebebänder können prefixiert werden und benötigen für die erste Verklebung nur einen leichten Anpressdruck.

Eine weitere Anwendung betrifft die Verklebung der FPCBs (bestehend aus Polyimid (a) und Kupfer (b) mit FR-4-Epoxy-Platten (d). Diese Epoxy-Platten werden zur partiellen Versteifung der FPCBs verklebt (Figur 2).
Auch hier werden in der Regel hitzeaktivierbare Klebefolien (d) eingesetzt. Auch diese Folien können in eine speziellen Ausführung haftklebrige Eigenschaften aufweisen.

Die Anwendung der Verklebung der FPCBs kann aber auch noch weiter gefasst werden. FPCBs sind in der heutigen Zeit in nahezu allen elektronischen Geräten vorhanden und müssen dementsprechend fixiert werden. Hier zu wird auf den unterschiedlichsten Sustraten verklebt, wenn auch hier bevorzugt Kunststoffsubstrate verwendet werden, da diese nur ein relativ geringes Gewicht aufweisen.

Generell muss die hitzeaktivierbare Folie zur Verklebung und zur Herstellung von FPCBs nach Temperaturaktivierung selbstvernetzend sein, da in der Regel die verklebten FPCBs auch noch ein Lötbad durchlaufen. Daher können keine Thermoplaste eingesetzt werden, obwohl diese zu bevorzugen wären, da diese in einigen wenigen Sekunden aktiviert werden können und dementsprechend schnell die Verbindung aufgebaut werden könnte.
Leider werden reine Thermoplaste bei hohen Temperaturen wieder weich und verlieren somit die Lötbadbeständigkeit.
Weitere hitzeaktivierbare Klebebänder, wie die in US 5,478,885 beschriebenen auf epoxidierten Styrol-Butadien bzw. Styrol-Isopren basierenden Blockcopolymere, besitzen den Nachteil, dass sie sehr lange Aushärtzeiten zur Vollaushärtung benötigen und in der Regel keinen Tack aufweisen. Sie lassen sich nur relativ langsam verarbeiten.
Dies trifft auch auf andere Epoxy-basierende Systeme zu, wie sie z.B. in WO 96/33248 beschrieben sind, zu. Ein weiterer Nachteil bestehender Folien ist die Weichheit der hitzeaktivierbaren Folie bei Raumtemperatur bzw. bei der Anwendungstemperatur. Solche hitzeaktivierbaren Klebebänder lassen sich schlecht handhaben, da diese als freier Film nur schlecht zum FPCB übertragen werden können.

Eine weiter Form von Klebebändern sind gewisse Strukturklebebänder. Diese Klebebänder basieren auf Polyacrylaten, sind haftklebrig und härten unter Hitze aus. Aufgrund ihrer Weichheit sind sie als freier Film ebenfalls schwierig zu handhaben und neigen zum Verziehen der Form.

Auf Phenolresolharz-basierende hitzeaktivierbare Klebebänder vierden in der Regel ausgeschlossen, da Sie während der Aushärtung flüchtige Bestandteile freisetzen und somit zu einer Blasenbildung führen. Blasenbildung ist ebenfalls unerwünscht, da hierdurch die Gesamtdicke des FPCBs und dadurch auch die Funktionsweise des FPCBs gestört werden kann.

Die Schrift EP 1 544 274 A, die einen Stand der Technik nach Art. 54 (3) EPÜ darstellt, offenbart hitzeaktivierbare Klebemassen auf Blockcopolymerbasis, gibt jedoch keine Hinweise darauf, wie diese Blockcopolymere aufgebaut sein sollen.
Die Schriften WO 02/10309 A, WO 02/10308 A, EP 1 008 640 A, EP 921 1780 A und US 5,403,658 A beschreiben Haftklebemassen, jedoch keine hitzeaktivierbaren Klebemassen, auf Blockcopolymerbasis.

Es besteht somit der Bedarf für eine hitzeaktivierbare Folie, die schnell aushärtet, selbstvernetzend und lötbadbeständig ist, eine gute Haftung auf Polyimid und FR-4 (mit Epoxydharz gebundenes Glasfasergewebe) besitzt und als freier Film bei Raumtemperatur sich gut handhaben und zur Kontaktierung bohren lasst.

Gelöst wird diese Aufgabe überraschend durch eine Klebmasse, wie sie in dem Hauptanspruch näher gekennzeichnet ist. Gegenstand der Unteransprüche sind vorteilhafte Weiterentwicklungen des Erfindungsgegenstandes.

Insbesondere wird die Klebmasse in Form einer Klebstofffolie angeboten.

Die erfindungsgemäße Klebemasse umfasst
a) zumindest ein acylathaltiges Blockcopolymer, das durch die stöchiometrische Formel [P(A)ᵢP(B)ⱼ]ₖ (I) beschrieben wird, wobei die acrylathaltigen Blockcopolymere mit einem Anteil von 40 bis 98 Gew.-% vorliegen,
b) ein oder mehrere klebrigmachende Epoxy- und/oder Novolak- und/oder Phenolharze mit einem Anteil von 2 bis 60 Gew.-%.

Dabei bedeuten
- A: ein oder mehrere Monomere des Typs A ,
- B: ein oder mehrere Monomere des Typs B,
- P(A): einen Polymerblock, erhalten durch Polymerisation wenigstens eines Monomers des Typs A.

Die Zusammensetzung der Klebemasse kann sich auf die Komponenten a) und b) sowie a), b) und c) beschränken oder in jedem der beiden Fälle weitere Komponenten aufweisen.

Die erfindungsgemäße Klebmasse kann in einer ersten Ausführungsvariante in einer nicht oder wenig tackigen Ausgestaltung vorliegen, in einer zweiten Ausführungsvariante wird sie in einer tackigen Ausführungsvariante angeboten.
- P(B): einen Polymerblock, erhalten durch Polymerisation wenigstens eines Monomeren des Typs B.

Erfingdungsgemäß werden als Blockcopolymere Zweiblockcopolymere nach Formel (I) mit i = j = k = 1 und/oder Dreiblockcopolymere nach Formel (I) mit i + j = 3 (i, j > 0) und k = 1 und/oder lineare und/oder sternförmige Multiblockcopolymere eingesetzt.

Bevorzugt umfasst die Klebemasse weiterhin
c) zumindest einen Härter zur Vernetzung der Epoxy-, Novolak- und/oder Phenolharze mit einem Anteil von bis zu 10 Gew.-%, bezogen auf die Klebemasse incl. Härter.

Die Zusammensetzung der Klebemasse kann sich auf die Komponenten a) und b) sowie a).. b) und c) beschränken oder in jedem der beiden Fälle weitere Komponenten aufweisen.

Die erfindungsgemäße Klebmasse kann in einer ersten Ausführungsvariante in einer nicht oder wenig tackigen Ausgestaltung vorliegen, in einer zweiten Ausführungsvariante wird sie in einer tackigen Ausführungsvariante angeboten.

Tack ("Anfassklebrigkeit", "Sofortklebrigkeit") ist die Eigenschaft von Haftklebstoffen, an Substraten sofort anzuhaften. Klebstoffe werden klebrig oder haftklebrig genannt, wenn sie an einem Substrat "ankleben" oder "anhaften", dies kann ohne oder mit zusätzlicher Druckeinwirkung geschehen.
Tackige ("anfassklebrige") Haftklebstoff zeigen das klebrige Verhalten bereits ohne Anwendung höherer Anpressdrücke, druckempfindliche Haftklebstoffe zeigen insbesondere durch Ausübung eines gewissen Anpressdruckes klebrige Eigenschaften. Gute Haftklebstoffe besitzen bereits einen Tack, haften also bereits ohne die Anwendung von Anpressdrücken auf einem Substrat, und verkleben bei Ausübung eines Anpressdruckes besonders gut.

Weiterhin ist Gegenstand der Erfindung die Verwendung der erfindungsgemäßen hitzeaktivierbaren Klebemasse zur Verklebung und/oder Herstellung von Leiterplatten, insbesondere von Flexible Printed Circuit Boards.

Die Erfindung betrifft dementsprechend weiterhin insbesondere hitzeaktivierbare Klebemassen auf Basis von Acrylatblockcopolymeren, wobei diese eine Kombination von chemisch miteinander verknüpften Polymerblöcken P(A) und P(B) enthalten, welche unter Anwendungsbedingungen in wenigstens zwei mikrophasenseparierte Bereiche segregieren, wobei die mikrophasenseparierten Bereiche Erweichungstemperaturen im Bereich zwischen -125 °C und +20 °C, bevorzugt zwischen -100 °C und +20 °C, besonders bevorzugt zwischen -80 °C und +20 °C aufweisen.

Unter Erweichungstemperatur soll im Rahmen dieser Erfindung eine Glasübergangstemperatur für amorphe Systeme und eine Schmelztemperatur bei semikristallinen Polymeren verstanden werden. Die hier angegebenen Temperaturen entsprechen solchen, die aus quasistationären Experimenten, wie z.B. mit Hilfe der DSC, erhalten werden.

Allgemein werden die Acrylatblockcopolymere durch die stöchiometrische Formel [P(A)ᵢP(B)ⱼ]ₖ (I) beschrieben. Erfindungsgemäß besonders bevorzugt werden für den Einsatz in hitzeaktivierbaren Klebemassen Zweiblockcopolymere nach Formel (I) mit i = j = k = 1 und damit die am einfachsten aufgebauten und zu synthetisierenden Blockcopolymere sowie Dreiblockcopolymere nach Formel (I) mit i + j = 3 (i, j > 0) und k = 1 genutzt.

A und B stehen hierbei für ein oder auch mehrere Monomere des Typs A sowie für ein oder mehrere Monomere des Typs B (detaillierte Beschreibung s.u.), welche zur Herstellung des jeweiligen Polymerblockes nutzbar sind. P(A) steht für einen Polymerblock, erhalten durch Polymerisation wenigstens eines Monomers des Typs A. P(B) steht für einen Polymerblock erhalten durch Polymerisation wenigstens eines Monomers des Typs B.

In einer vorteilhaften Ausführung der Erfindung werden acrylathaltige Blockcopolymere der Form P(A)-P(B), bestehend aus zwei aneinandergeknüpften Polymerblöcken P(A) und P(B), wobei P(A) durch P(A/C) und/oder P(B) durch P(B/D) substituiert sein kann, eingesetzt. P(A) und P(B) bezeichnen Polymerblöcke erhalten durch Polymerisation wenigstens eines Monomeren des Typs A bzw. durch Polymerisation wenigstens eines Monomeren des Typs B, P(A/C) und P(B/D) bezeichnen Copolymerblöcke erhalten durch Polymerisation wenigstens eines Monomeren des Typs A sowie wenigstens eines Monomeren des Typs C bzw. durch Polymerisation wenigstens eines Monomeren des Typs B sowie wenigstens eines Monomeren des Typs D.

Besonders vorteilhaft in erfindungsgemäßen hitzeaktivierbaren Klebemassen einsetzbare Blockcopolymere enthaltend zwei aneinandergeknüpfte Polymerblöcke sind solche des allgemeinen Typs P(A)-P(B/D), bei welchen jedes Blockcopolymer aus einem ersten Polymerblock P(A) und einem daran angeknüpften Copolymerblock P(B/D) besteht, wobei
- P(A) einen Polymerblock, erhalten durch Polymerisation mindestens eines Monomeren des Typs A, repräsentiert, wobei P(A) eine Erweichungstemperatur zwischen -125 °C und +20 °C, bevorzugt zwischen -100 °C und +20 °C, besonders bevorzugt zwischen -80 °C und +20 °C aufweist.
- P(B/D) einen Copolymerblock, erhalten durch Copolymerisation mindestens eines Monomeren des Typs B und mindestens eines Monomeren des Typs D, repräsentiert, wobei P(B/D) eine Erweichungstemperatur zwischen -125 °C und +20 °C, bevorzugt zwischen -100 °C und +20 °C, besonders bevorzugt zwischen -80 °C und +20 °C aufweist. Monomere vom Typ D besitzen bevorzugt mindestens eine funktionelle Gruppe zur Vernetzung, welche sich in einer radikalischen Copolymerisationsreaktion im wesentlichen inert verhält,
- die Polymerblöcke P(A) und P(B/D) unter Anwendungsbedingungen mikrophasensepariert vorliegen, die Polymerblöcke P(A) und P(B/D) somit unter Anwendungsbedingungen nicht vollständig (homogen) mischbar sind.

Für die nicht bzw. wenig tackige Ausführungsvariante wird die funktionelle Gruppe der Monomere vom Typ D bevorzugt derart gewählt, dass sie insbesondere zur Vernetzung von dem Reaktivharz mit dem Blockcopolymer dient. In der tackigen Ausführungsvariante wird die funktionelle Gruppe der Monomere D bevorzugt derart gewählt, dass sie insbesondere zur Steigerung der Kohäsion des Blockcopolymeren dient.

In einer weiteren günstigen Ausführungsform, insbesondere im Falle der nicht bzw. wenig tackigen Ausführungsvariante der erfindungsgemäßen Klebemasse, kann die vernetzende Wirkung des Copolymerblockes P(B/D) vorteilhaft durch Bindungsbildung zwischen den einzelnen Blockcopolymer-Makromolekülen P(A)-P(B/D) hervorgerufen werden, wobei die vernetzenden Gruppen der Comonomere vom Typ D eines Blockcopolymer-Makromoleküls mit zumindest einem weiteren Blockcopolymer-Makromolekül reagieren. Besonders bevorzugt ist hier als funktionelle Gruppe der Comonomere vom Typ D eine Epoxygruppe.

In günstiger Weise insbesondere für die tackige Ausführungsvariante der erfindungsgemäßen Klebemasse kann die kohäsionssteigernde Wirkung des Copolymerblockes P(B/D) durch Bindungen zwischen den einzelnen Blockcopolymer Makromolekülen P(A)-P(B/D) hervorgerufen werden, wobei die funktionellen Gruppen der Comonomere vom Typ D eines Blockoopolymer-Makromoleküls mit zumindest einem weiteren Blockcopolymer-Makromolekül in Wechselwirkung treten. In besonders vorteilhafter Weise ruft hier die funktionelle Gruppe der Comonomere vom Typ D mittels Dipol-Dipol-Wechselwirkungen und/oder Wasserstoffbrückenbindungen die erwünschte Steigerung der Kohäsion hervor. Die Kohäsionssteigerung fördert weiterhin die Steifigkeit der Folie und damit auch die Handhabung als freier Film. Besonders bevorzugt als funktionelle Gruppe der Comonomere vom Typ D ist insbesondere für diese tackige Ausführungsvariante eine Carbonsäuregruppe oder eine Hydroxygruppe.

Monomere des Typs A für den Polymerblock P(A) werden bevorzugt derart ausgewählt, dass die entstehenden Polymerblöcke P(A) in der Lage sind, eine zweiphasige mikrophasenseparierte Struktur mit den Copolymerblöcken P(B/D) auszubilden. Blockcopolymere können sich in der Verträglichkeit der Blöcke zueinander ähnlich wie unabhängig vorliegende Polymere verhalten: Aufgrund der in der Regel bestehenden Unverträglichkeit unterschiedlicher Polymere entmischen sich diese nach einer vorherigen Vermischung wieder, es bilden sich mehr oder weniger homogene Bereiche aus den einzelnen Polymeren aus. Bei Blockcopolymeren (z.B. Di-, Tri-, Stern-, Multiblockcopolymeren) kann diese Unverträglichkeit auch zwischen den einzelnen, unterschiedlichen Polymerblöcken bestehen. Hier kann dann die Entmischung aber nur begrenzt stattfinden, da die Blöcke chemisch miteinander verbunden sind. Es kommt zur Ausbildung so genannter Domänen (Phasen), in denen sich mehrere gleichartige Blöcke zusammenlagem. Da die Domänen in der Größenordnung der ursprünglichen Polymerblöcke liegen, spricht man von Mikrophasenseparierung. Die Polymerblöcke können elongierte mikrophasenseparierte Bereiche (Domänen), z. B. in Form von prolaten, mithin uniaxial elongierten (z. B. stäbchenförmigen), oblaten, mithin biaxial elongierten (z. B. schichtförmigen), Strukturelementen, dreidimensional cokontinuierliche mikrophasenseparierte Bereiche oder eine kontinuierliche Matrix einer Polymerblocksorte (üblicherweise derjenigen mit dem größeren Gewichtsanteil) mit darin dispergierten Bereichen der anderen Polymerblocksorte (üblicherweise der mit dem geringeren Gewichtsanteil) ausbilden können.

Der Anteil der Polymerblöcke P(B/D) liegt bevorzugt zwischen ca. 20 und 95 Gew.-%, besonders bevorzugt zwischen 25 und 80 Gew.-% des gesamten Blockcopolymeren.

Weiterhin liegt der Gewichtsanteil der Comonomere vom Typ D im Copolymerblock P(B/D) im Verhältnis zum Gewichtsanteil der Monomere vom Typ B zwischen 0 % und 50 %, bevorzugt zwischen 0,5 % und 30 %, besonders bevorzugt zwischen 1 % und 20%.

Weiterhin basieren in einer weiteren erfinderischen Auslegung die hitzeaktivierbaren Klebemassen auf Blockcopolymeren des allgemeinen Typs P(A/C)-P(B/D) sowie solche des allgemeinen Typs P(A)-P(B), wobei
- P(A) und P(B) je einen Polymerblock erhalten durch Polymerisation mindestens eines Monomeren des Typs A bzw. durch Polymerisation mindestens eines Monomeren des Typs B repräsentiert, wobei P(A) und P(B) eine Erweichungstemperatur zwischen -125 °C und +20 °C, bevorzugt zwischen -100 °C und +20 °C, besonders bevorzugt zwischen -80 °C und +20 °C aufweisen.
- P(A/C) und P(B/D) je einen Copolymerblock erhalten durch Copolymerisation mindestens eines Monomeren des Typs A bzw. mindestens eines Monomeren des Typs B und mindestens eines Monomeren vom Typ C bzw. mindestens eines Monomeren vom Typ D repräsentiert, wobei P(A/C) und P(B/D) eine Erweichungstemperatur zwischen -125 °C und +20 °C, bevorzugt zwischen -100 °C und +20 °C, besonders bevorzugt zwischen -80 °C und +20 °C aufweisen. Monomere vom Typ C und D besitzen mindestens eine funktionelle Gruppe, welche sich in einer radikalischen Polymerisationsreaktion im Wesentlichen inert verhält,
- Polymerblöcke P(A) und P(B) bzw. Polymerblöcke P(A/C) und P(B/D) unter Anwendungsbedingungen mikrophasensepariert vorliegen, entsprechende Polymerblöcke somit unter Anwendungsbedingungen nicht vollständig (homogen) mischbar sind.

Für die nicht bzw. wenig tackige Ausführungsvariante wird wiederum die funktionelle Gruppe der Monomere vom Typ D bevorzugt derart gewählt, dass sie insbesondere zur Vernetzung von dem Reaktivharz mit dem Blockcopolymer dient, und in der tackigen Ausführungsvariante bevorzugt derart, dass sie insbesondere zur Steigerung der Kohäsion des Blockcopolymeren dient.

Der Anteil der Polymerblöcke P(B) und P(B/D) liegt bevorzugt zwischen ca. 20 und 95 Gew.-%, besonders bevorzugt zwischen 25 und 80 Gew.-% des gesamten Blockcopolymeren, so dass Polymerblöcke P(B) bzw. P(B/D) elongierte mikrophasenseparierte Bereiche, z. B. in Form von prolaten (z. B. stäbchenförmigen) oder oblaten (z. B. flächenförmigen) Strukturelementen, dreidimensional cokontinuierliche mikrophasenseparierte Bereiche oder eine kontinuierliche Matrix mit darin dispergierten Bereichen der Polymerblöcke P(A) bzw. P(A/C) ausbilden können. Weiterhin liegt der Gewichtsanteil der Comonomere vom Typ D im Copolymerblock P(B/D) im Verhältnis zum Gewichtsanteil der Comonomeren vom Typ B im Copolymerblock P(B/D) bei bis zu 50 %, bevorzugt zwischen 0,5 % und 30 %, besonders bevorzugt zwischen 1 % und 20 %. Gleiches gilt für den Gewichtsanteil der Comonomere vom Typ C im Copolymerblock P(A/C) im Verhältnis zum Gewichtsanteil der Comonomere vom Typ A im Copolymerblock P(A/C), wobei die Gewichtsverhältnisse jedoch unabhängig voneinander gewählt werden können.

Weiterhin können vorteilhaft in den erfindungsgemäßen hitzeaktivierbaren Klebemassen Blockcopolymere vom allgemeinen Aufbau Z-P(A)-P(B)-Z', Z-P(A/C)-P(B)-Z', Z-P(A/C)-P(B/D)-Z' eingesetzt werden, wobei Z und Z' weitere Polymerblöcke oder auch funktionelle Gruppen umfassen können und wobei Z und Z' gleich oder verschieden sein können.

Erfindungsgemäß besonders bevorzugt nutzbar sind Blockcopolymere, die eine Einheit von drei aneinandergeknüpften Polymerblöcken der Art P(A)-P(B)-P(A') enthalten, wobei P(A) durch P(A/C) und/oder P(B) durch P(B/D) und/oder P(A') durch P(A'/C') substituiert sein kann. P(A), P(B) und P(A') kennzeichnen Polymerblöcke, erhalten durch Polymerisation mindestens eines Monomers des Typs A, B bzw. A'. P(A/C), P(B/D) und P(A'/C') kennzeichnen Copolymerblöcke, erhalten durch Copolymerisation mindestens eines Monomers des Typs A und eines Monomers des Typs C, bzw. mindestens eines Monomers des Typs B und eines Monomers des Typs D, bzw. mindestens eines Monomers des Typs A' und eines Monomers des Typs C'.

Strukturell sind erfindungsgemäß sowohl symmetrische als auch asymmetrische Aufbauten zuvor genannter Blockcopolymere möglich, dies sowohl bezüglich geometrischer Parameter (z. B. Blocklängen, Blockmolmassen-(Blocklängen-)verteilung), als auch bzgl. des chemischen Aufbaus der Polymerblöcke. In den nachfolgenden Beschreibungen wird davon ausgegangen, dass beide Arten von Polymeren, symmetrische als auch asymmetrische, erfindungsgemäß eingesetzt werden können. Um die Beschreibung übersichtlich zu halten, ist die Möglichkeit der Molekülasymmetrie nicht in allen Fällen explizit dargestellt.

Besonders vorteilhaft in erfindungsgemäßen hitzeaktivierbaren Klebemassen einsetzbare Blockcopolymere, die drei aneinandergeknüpfte Polymerblöcke enthalten, sind solche auf der Basis des allgemeinen Typs P(A)-P(B/D)-P(A), bei denen jedes Blockcopolymer aus einem mittleren Copolymer-Block P(B/D) und zwei daran angeknüpften Polymerblöcken P(A) besteht, wobei
- P(B/D) ein Copolymer darstellt, erhalten durch Copolymerisation von mindestens einem Monomer des Typs B und mindestens einem Monomer des Typs D, wobei P(B/D) eine Erweichungstemperatur zwischen -125 °C und +20 °C, bevorzugt zwischen -100 °C und +20 °C, besonders bevorzugt zwischen -80 °C und +20 °C aufweist, wobei Comonomere vom Typ D mindestens eine funktionelle Gruppe besitzt, welche sich in einer radikalischen Polymerisationsreaktion im wesentlichen inert verhält,
- P(A) ein Polymerblock erhalten durch Polymerisation mindestens eines Monomeren des Typs A darstellt, wobei P(A) eine Erweichungstemperatur zwischen -125 °C und +20 °C, bevorzugt zwischen -100 °C und +20 °C, besonders bevorzugt zwischen - 80 °C und +20 °C aufweist.
- Polymerblöcke P(A) und P(B/D) unter Anwendungsbedingungen mikrophasensepariert vorliegen, die Polymerblöcke P(A) und die Polymerblöcke P(B/D) somit unter Anwendungsbedingungen nicht vollständig (homogen) mischbar sind.

Für die nicht bzw. wenig tackige Ausführungsvariante wird wiederum die funktionelle Gruppe der Monomere vom Typ D bevorzugt derart gewählt, dass sie insbesondere zur Vernetzung von dem Reaktivharz mit dem Blockcopolymer dient, und in der tackigen Ausführungsvariante bevorzugt derart, dass sie insbesondere zur Steigerung der Kohäsion des Blockcopolymeren dient.

In einer weiteren günstigen Ausführungsform, insbesondere im Falle der nicht bzw. wenig tackigen Ausführungsvariante der erfindungsgemäßen Klebemasse, kann die vernetzende Wirkung des Copolymerblockes P(B/D) vorteilhaft durch Bindungbildung zwischen den einzelnen Blockcopolymer-Makromolekülen P(A)-P(B/D) hervorgerufen werden, wobei die vernetzenden Gruppen der Comonomere vom Typ D eines Blockcopolymer-Makromoleküls mit zumindest einem weiteren Blockcopolymer-Makromolekül reagieren. Besonders bevorzugt ist hier als funktionelle Gruppe der Comonomere vom Typ D eine Epoxygruppe.

In günstiger Weise insbesondere für die tackige Ausführungsvariante der erfindungsgemäßen Klebemasse kann die kohäsionssteigernde Wirkung des Copolymerblockes P(B/D) durch Bindungen zwischen den einzelnen Blockcopolymer-Makromolekülen P(A)-P(B/D) hervorgerufen werden, wobei die funktionellen Gruppen der Comonomere vom Typ D eines Blockcopolymer-Makromoleküls mit zumindest einem weiteren Blockcopolymer-Makromolekül in Wechselwirkung treten. In besonders vorteilhafter Weise ruft hier die funktionelle Gruppe der Comonomere vom Typ D mittels Dipol-Dipol-Wechselwirkungen und/oder Wasserstoffbrückenbindungen die erwünschte Steigerung der Kohäsion hervor. Die Kohäsionssteigerung fördert weiterhin die Steifigkeit der Folie und damit auch die Handhabung als freier Film. Besonders bevorzugt als funktionelle Gruppe der Comonomere vom Typ D ist insbesondere für diese tackige Ausführungsvariante eine Carbonsäuregruppe oder eine Hydroxygruppe.

Monomere des Typs A für die Polymerblöcke P(A) werden bevorzugt derart ausgewählt, dass die entstehenden Polymerblöcke P(A) in der Lage sind, eine zweiphasige mikrophasenseparierte Struktur mit den Copolymerblöcken P(B/D) auszubilden. Der Anteil der Polymerblöcke P(A) liegt bevorzugt zwischen 5 und 95 Gew.-%, besonders bevorzugt zwischen 10 und 90 Gew.-% des gesamten Blockcopolymeren.
Weiterhin gilt für den Polymerblock P(B/D), dass der Gewichtsanteil der Monomeren vom Typ D im Verhältnis zum Gewichtsanteil der Monomeren vom Typ B zwischen 0 % und 50 %, bevorzugt zwischen 0,5 % und 30 %, besonders bevorzugt zwischen 1 % und 20 % beträgt.

Des weiteren besonders vorteilhaft in erfindungsgemäßen hitzeaktivierbaren Klebemassen einsetzbare Blockcopolymere sind solche des allgemeinen Typs P(B/D)-P(A)-P(B/D), wobei jedes Blockcopolymer aus einem mittleren Polymerblock P(A) und zwei beidseitig an diesen angeknüpfte Polymerblöcke P(B/D) besteht, dadurch gekennzeichnet, dass
- P(B/D) ein Copolymer erhalten durch Copolymerisation wenigstens eines Monomeren des Typs B und wenigstens eines Monomeren vom Typ D, wobei P(B/D) eine Erweichungstemperatur zwischen -125 °C und +20 °C, bevorzugt zwischen -100 °C und +20 °C, besonders bevorzugt zwischen -80 °C und +20 °C aufweist, wobei die Monomere D mindestens eine funktionelle Gruppe besitzen, welche sich in einer radikalischen Polymerisationsreaktion im wesentlichen inert verhält,
- P(A) ein Polymer kennzeichnet, erhalten durch Polymerisation mindestens eines Monomeren vom Typ A, wobei P(A) eine Erweichungstemperatur zwischen -125 °C und +20 °C, bevorzugt zwischen -100 °C und +20 °C, besonders bevorzugt zwischen -80 °C und +20 °C aufweist.
- Polymerblöcke P(A) und Polymerblöcke P(B/D) mikrophasensepariert vorliegen, Blöcke P(B/D) und P(A) mithin unter Anwendungsbedingungen nicht vollständig mischbar sind.

Für die nicht bzw. wenig tackige Ausführungsvariante wird wiederum die funktionelle Gruppe der Monomere vom Typ D bevorzugt derart gewählt, dass sie insbesondere zur Vernetzung von dem Reaktivharz mit dem Blockcopolymer dient, und in der tackigen Ausführungsvariante bevorzugt derart, dass sie insbesondere zur Steigerung der Kohäsion des Blockcopolymeren dient. Für die wenig oder nicht tackige Ausführungsvariante werden als funktionelle Gruppen bevorzugt wiederum Epoxygruppen eingesetzt, für die tackige Ausführungsvariante sehr bevorzugt Carbonsäuregruppen und/oder Hydroxygruppen.

Bevorzugt liegt der Anteil der Polymerblöcke P(A) zwischen 5 und 95 Gew.-%, insbesondere zwischen 10 und 90 Gew.-% des gesamten Blockcopolymeren.

Weiterhin liegt der Gewichtsanteil der Comonomere vom Typ D im Copolymerblock P(B/D) im Verhältnis zum Gewichtsanteil der Comonomeren vom Typ B im Copolymerblock P(B/D) zwischen 0% und 50%, bevorzugt zwischen 0,5% und 30%, besonders bevorzugt zwischen 1% und 20%.

Des weiteren besonders vorteilhaft in erfindungsgemäßen hitzeaktivierbaren Klebemassen einsetzbare Blockcopolymere sind solche des allgemeinen Typs P(B/D)-P(A/C)-P(B/D), wobei jedes Blockcopolymer aus einem mittleren Polymerblock P(A/C) und zwei beidseitig an diesen angeknüpfte Polymerblöcke P(B/D) besteht, dadurch gekennzeichnet, dass
- P(B/D) und P(A/C) je einen Copolymerblock erhalten durch Copolymerisation wenigstens eines Monomeren vom Typ A bzw. B und wenigstens eines Monomeren vom Typ C bzw. D repräsentiert, wobei P(B/D) und P(A/C) eine Erweichungstemperatur zwischen -125 °C und +20 °C, bevorzugt zwischen -100 °C und +20 °C, besonders bevorzugt zwischen -80 °C und +20 °C aufweist, wobei die Monomere C und D mindestens eine funktionelle Gruppe besitzen, welche sich in einer radikalischen Polymerisationsreaktion im wesentlichen inert verhält, und welche insbesondere zur Reaktion mit dem Reaktivharz dient.
- Polymerblöcke P(A/C) und Polymerblöcke P(B/D) mikrophasensepariert vorliegen, Blöcke P(B/D) und P(A/C) mithin unter Anwendungsbedingungen nicht vollständig (homogen) mischbar sind.

Für die nicht bzw. wenig tackige Ausführungsvariante wird wiederum die funktionelle Gruppe der Monomere vom Typ C und/oder D bevorzugt derart gewählt, dass sie insbesondere zur Vernetzung von dem Reaktivharz mit dem Blockcopolymer dient, und in der tackigen Ausführungsvariante bevorzugt derart, dass sie insbesondere zur Steigerung der Kohäsion des Blockcopolymeren dient.

Bevorzugt liegt der Anteil der Polymerblöcke P(A/C) zwischen 5 und 95 Gew.-%, insbesondere zwischen 10 und 90 Gew.-% des gesamten Blockcopolymeren.

Bevorzugt liegt der Gewichtsanteil der Comonomere vom Typ D im Copolymerblock P(B/D) im Verhältnis zum Gewichtsanteil der Comonomeren vom Typ B im Copolymerblock P(B/D) bei bis zu 50 %, bevorzugt zwischen 0,5 % und 30 %, besonders bevorzugt zwischen 1 % und 20 %. Gleiches gilt für das Verhältnis der Gewichtsanteile der Comonomere C und A im Copolymerblock P(A/C).

Weiterhin vorteilhaft und Teil dieser Erfindung sind Verbindungen der allgemeinen Struktur Z-P(A)-P(B)-P(A')-Z', wobei Z und Z' weitere Polymerblöcke oder auch funktionelle Gruppen umfassen können und Z und Z' gleich oder verschieden sein können. P(A), P(B) und P(A') können wahlweise und unabhängig voneinander auch als Copolymerblöcke P(A/C), P(B/D) bzw. P(A'/C') gestaltet sein. In speziellen Fällen können einzelne Blöcke ausgespart sein.

Erfindungsgemäß vorteilhaft lassen sich ebenfalls lineare und sternförmige Multiblockcopolymere von bevorzugt nachfolgendem Aufbau nutzen:

| | | |
|---|---|---|
| (II) | [P(E₁)HP(E₂)]-[P(E₃)]-...-[P(Em)] | mit m > 3 |
| (III) | {[P(E_{1,δ}-]-[P(E_{2,δ}-]-[P(E_{3,δ}-]-...-[P(E_{n,δ}-)]}ₓX | mit x > 2, n > 1, |
| | | Laufzahl δ = 1, 2, ..., x |

wobei
- (II) ein lineares Multiblockcopolymer bestehend aus m Polymerblöcken P(E_{λ}) mit λ = 1 bis m bezeichnet, wobei jeder Polymerblock vom Typ P(E) ist, also aus Monomeren des Typs E aufgebaut ist..
- (III) ein sternförmiges Multiblockcopolymer, enthaltend einen multifunktionellen Vernetzungsbereich X, in welchem x Polymerarme chemisch miteinander verbunden sind und jeder Polymerarm aus wenigstens einem Polymerblock P(E_{ν,δ}) mit mit ν =1 bis n besteht, wobei jeder Polymerblock vom Typ P(E) ist, also aus Monomeren des Typs E aufgebaut ist.
- P(E) jeweils durch P(E/F) substituiert sein kann und P(E) Polymerblöcke darstellen, erhalten durch Polymerisation wenigstens eines Monomeren des Typs E und P(E/F) Copolymerblöcke darstellen, erhalten durch Copolymerisation wenigstens eines Monomeren des Typs E sowie wenigstens eines Monomeren des Typs F.
- die einzelnen P(E) eine Erweichungstemperatur zwischen -125 °C und +20 °C, bevorzugt zwischen -100 °C und +20 °C, besonders bevorzugt zwischen -80 °C und +20 °C aufweisen. Monomere vom Typ C besitzen mindestens eine funktionelle Gruppe, welche sich in einer radikalischen Copolymerisationsreaktion im wesentlichen inert verhält,
- Polymere unter Anwendungsbedingungen mikrophasensepariert vorliegen, die einzelnen Polymerblöcke somit unter Anwendungsbedingungen nicht vollständig (homogen) mischbar sind.

Im Falle des Multiblockcopolymers ist λ eine Laufzahl, die zur Unterscheidung der Polymerblöcke des Typs P(E) im Multiblockcopolymer dient und von 1 bis m läuft. Die einzelnen Polymerblöcke P(E_{λ}) können sich in ihrem Aufbau und ihrer Länge unterscheiden, es können aber auch einige oder alle Polymerblöcke P(E_{λ}) identisch sein. Im Falle des Sternförmigen Polymers bezeichnet ν eine Laufzahl, die hier zur Unterscheidung der einzelnen Polymerblöcke des Typs P(E) in jedem Polymerarm dient. Einige oder alle der Polymerblöcke P(E_{ν,δ}) und/oder der Polymerarme können identisch sein, es können sich aber auch die einzelnen "Arme" in der Art der einzelnen Polymerblöcke P(E_{ν,δ}), in der Abfolge der n Polymerblöcke in jedem Arm und in der Länge der einzelnen Polymerblöcke unterscheiden. Die unterschiedlichen Arme sollen in der oben angegebenen Formel (III) durch die Laufzahl δ symbolisiert werden; die Laufzahl δ zeigt somit an, dass die x im multifunktionellen Vernetzungsbereich durch chemische Bindung miteinander verbundenen Polymerarme eine jeweils unterschiedliche Anzahl von Polymerblöcken P(E) und/oder einen unterschiedlichen Aufbau aufweisen können.
Der multifunktionelle Vernetzungsbereich X (Verknüpfungsstelle X) kann dabei jede Struktureinheit sein, die in der Lage ist, die einzelnen Polymerarme chemisch miteinander zu verknüpfen.

Für die nicht bzw. wenig tackige Ausführungsvariante wird wiederum die funktionelle Gruppe der Monomere vom Typ C bevorzugt derart gewählt, dass sie insbesondere zur Vernetzung von dem Reaktivharz mit dem Blockcopolymer dient, und in der tackigen Ausführungsvariante bevorzugt derart, dass sie insbesondere zur Steigerung der Kohäsion des Blockcopolymeren dient.

In einer bevorzugten Auslegung der Erfindung weisen die Acrylatblockcopolymere eines oder mehrere der folgenden Kriterien auf:
- eine (zahlenmittlere) Molmasse Mₙ unterhalb 10.000.000 g/mol, bevorzugt eine Molmasse zwischen 30.000 g/mol und 1.000.000 g/mol,
- eine Polydispersität D = M_{w}/Mₙ von weniger als 5, bevorzugt weniger als 3,
- ein oder mehrere auf die "hauptketten" aufgepropfte Seitenketten.

Die Zusammensetzung für die hitzeaktivierbaren Klebemassen lassen sich durch Veränderung von Rohstoffart und -anteil in weiten Rahmen variieren. Ebenso können weitere Produkteigenschaften wie beispielsweise Farbe, thermische oder elektrische Leitfähigkeit durch gezielte Zusätze von Farbstoffen, mineralischen bzw. organischen Füllstoffen und/oder Kohlenstoff- bzw. Metallpulvern erzielt werden. Vorzugsweise weist die Klebstofffolie eine Dicke von 5 - 300 µm, bevorzugt zwischen 10 und 50 µm, auf.

### Monomere

### Monomere des Typs A, B und/oder E

Die Monomere A für die Polymerblöcke P(A) und/oder die Copolymerblöcke P(A/C), die Monomere B für die Polymerblöcke P(B) und/oder die Copolymerblöcke P(B/D) sowie die Monomere E für die Polymerblöcke P(E) und/oder die Copolymerblöcke P(E/F) der erfindungsgemäß verwendeten hitzeaktivierbaren Klebemassen werden bevorzugt derart gewählt, dass die im Blockcopolymer miteinander verknüpften Blöcke nicht vollständig (homogen) miteinander mischbar sind und sich in Folge dessen eine Zweiphasenstruktur ausbildet. Diese Struktur umfasst Domänen, die sich aus mischbaren Blocksegmenten (im Idealfall auch ganzer Blöcke) unterschiedlicher (und gegebenenfalls auch gleicher) Ketten zusammensetzen. Voraussetzung für die Mischbarkeit ist ein chemisch ähnlicher Aufbau dieser Blocksegmente oder Blöcke und aufeinander abgestimmt Blocklängen. Je nach Volumenanteil der einen Phase im Gesamtsystem nehmen die Domänen eine bestimmt Form und Überstruktur an. Abhängig von der Wahl der verwendeten Monomere können sich die Domänen in ihren Erweichungs-/Glasübergangstemperaturen, ihrer Härte und/oder ihrer Polarität unterscheiden.

Die Monomere A, B bzw. E, die in den Polymerblöcken P(A), P(B) und P(E) und in den Copolymerblöcken P(A/C), P(B/D) und P(E/F) zum Einsatz kommen, können erfindungsgemäß demselben Monomerpool entnommen, der im folgenden beschrieben ist.

Für die hier beschriebenen erfindungsgemäßen hitzeaktivierbaren Klebemassen werden als Monomere A, B bzw. E vorteilhaft Acrylmonomere oder Vinylmonomere eingesetzt, besonders bevorzugt solche, die die Erweichungs-/Glasübergangstemperatur des Polymerblocks P(A) bzw. des Polymerblocks P(B) bzw. des Polymerblocks P(E), bzw. des Copolymerblocks P(A/C) - auch in Kombination mit Monomer C - bzw. des Copolymerblock P(B/D) - auch in Kombination mit Monomer D - bzw. des Copolymerblocks P(E/F) - auch in Kombination mit Monomer F - auf unterhalb 20 °C herabsetzen.

In sehr vorteilhafter Weise bedient man sich bei der Auswahl der Monomere A, B bzw. E für die erfindungsgemäßen hitzeaktivierbaren Klebemassen einer oder mehrerer Verbindungen, welche sich durch die folgende allgemeine Formel beschreiben lassen

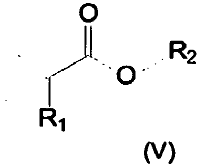

Dabei ist R₁ = H oder CH₃, der Rest R₂ wird aus der Gruppe der verzweigten oder unverzweigten, gesättigten Alkylgruppen mit 1 bis 20 Kohlenstoffatomen gewählt.

Acrylmomonere, die bevorzugt für die erfinderische hitzeaktiverbare Klebemasse als Monomere A, B, oder E eingesetzt werden, umfassen insbesondere Acryl- und Methacrylsäureester mit Alkylgruppen bestehend aus 1 bis 18 C-Atomen, bevorzugt 4 bis 9 C-Atomen. Spezifische Beispiele, ohne sich durch diese Aufzählung einschränken zu wollen, sind Methylacrylat, Ethylacrylat, n-Butylacrylat, n-Pentylacrylat, n-Hexylacrylat, n-Heptylacrylat, n-Octylacrylat, n-Nonylacrylat, Laurylacrylat, Stearylacrylat und deren verzweigten Isomere, wie z. B. 2-Ethylhexylacrylat, Isobutylacrylat und Isooctylacrylat.

Weitere für die Polymerblöcke P(A), P(B) und P(E) und/oder die Copolymerblöcke P(A/C), P(B/D) und P(E/F) einzusetzende Monomere im Sinne des Typs A, B und E sind monofunktionelle Acrylate bzw. Methacrylate von überbrückten Cycloalkylalkoholen, bestehend aus zumindestens 6 C-Atomen. Die Cycloalkylalkohole können auch substituiert sein. Spezifische Beispiele sind Cyclohexylmethacrylat, Isobornylacrylat, Isobornylmethacrylat und 3,5-Dimethyladamantylacrylat.

Weiterhin werden optional für die Polymerblöcke P(A), P(B) und P(E) und/oder Copolymerblöcke P(A/C), P(B/D) und P(E/F) im Sinne der Monomere A, B und E Vinylmonomere aus den folgenden Gruppen eingesetzt:
Vinylester, Vinylether, Vinylhalogenide, Vinylidenhalogenide, Vinylverbindungen mit aromatischen Cyclen und Heterocyclen in α-Stellung.
Auch hier seien nicht ausschließlich einige Beispiele genannt: Vinylacetat, Vinylformamid, Ethylvinylether, Vinylchlorid, Vinylidenchlorid, Acrylonitril.

Weiterhin werden optional, insbesondere bevorzugt für die wenig oder nicht tackige Ausführungsvariante der erfindungsgemäßen Klebemassen, im Sinne der Monomere des Typs A, B und E für die Polymerblöcke P(A), P(B) und P(E) und Copolymerblöcke P(A/C), P(B/D) und P(E/F) Vinylmonomere, und zwar insbesondere solche aus den folgenden Gruppen, eingesetzt:
Acrylsäure, Hydroxyethylacrylat, Hydroxypropylacrylat, Hydroxyethylmethacrylat, Hydroxypropylmethacrylat, n-Methylolacrylamid, Acrylsäure, Methacrylsäure, Allylalkohol, Maleinsäureanhydrid, Itaconsäureanhydrid, Itaconsäure, Phenoxyethylacrylat, Phenoxyethylmethacrylat, 2-Butoxyethylmethacrylat, 2-Butoxyethylacrylat, Cyanoethylmethacrylat, Cyanoethylacrylat, 6-Hydroxyhexylmethacrylat, Tetrahydrofufurylacrylat und Acrylamid.

Für die wenig oder nicht tackige Ausführungsvariante ebenfalls bevorzugt ist es, wenn für die Polymerblöcke P(A), P(B) und P(E) und/oder für die Copolymerblöcke P(A/C), P(B/D) und P(E/F) im Sinne der Monomere A, B und E Vinylmonomere aus den folgenden Gruppen eingesetzt werden:
N,N-Dialkylsubstituierte Amide, wie z. B. N,N-Dimethylacrylamid, N,N-Dimethylmethylmethacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)-methacrylamid, N-Methylolacrylamid, N-(Ethoxymethyl)acrylamid, N-Isopropylacrylamid, wobei diese Aufzählung als beispielhaft anzusehen ist.

Für die wenig oder nicht tackige Variante ist es vorteilhaft, wenn im Sinne der Monomer A, B und E für die Polymerblöcke P(A), P(B) und P(E) und Copolymerblöcke P(A/C), P(B/D) und P(E/F) solche (Meth)acrylmonomere und/oder Vinylmonomere gewählt werden, die die Erweichungs-/Glasübergangstemperatur des Copolymerblocks P(A/C) - auch in Kombination mit Monomer A - bzw. des Copolymerblocks P(B/D) - auch in Kombination mit Monomer B - bzw. des Copolymerblocks P(E/F) - auch in Kombination mit Monomer E - erhöhen.
Beispiele für entsprechende Monomere sind Methylmethacrylat, Cyclohexylmethacrylat, t-Butylacrylat, Isobornylmethacrylat, Benzylacrylat, Benzoinacrylat, acryliertes Benzophenon, Benzylmethacrylat, Benzoinmethacrylat, methacryliertes Benzophenon, Phenylacrylat, Phenylmethacrylat, t-Butylphenylacrylat, t-Butylphenylmethacrylat, 4-Biphenylacrylat, 2-Naphthylacrylat und 2-Naphthylmethacrylat, Styrol, wobei diese Aufzählung nicht abschließend ist.

Für die wenig oder nicht tackige Ausführungsvariante vorteilhaft einsetzbare Monomere des Typs A, B bzw. E für die Polymerblöcke P(A), P(B) und P(E) und Copolymerblöcke P(A/C), P(B/D) und P(E/F) sind weiterhin Vinylmonomere aus den folgenden Gruppen: Vinylaromatische Monomere, die auch alkyliert, funktionalisiert oder Heteroatome enthalten können, und die bevorzugt aromatischen Kerne aus C₄ bis C₁₈ besitzen, umfassen auch α-Methylstyrol, 4-Vinylbenzoesäure, das Natriumsalz der 4-Vinylbenzolsulfonsäure, 4-Vinylbenzylalkohol, 2-Vinylnaphthalin, 4-Vinylphenylboronsäure, 4-Vinylpyridin, Vinylsulfonsäurephenylester, 3,4-Dimethoxystyrol, Vinylbenzotrifluorid, p-Methoxystyrol, 4-Vinylanisol, 9-Vinylanthracen, 1-Vinylimidazol, 4-Ethoxystyrol, N-Vinylphthalimid, wobei diese Aufzählung keinen Anspruch auf Vollständigkeit erhebt.

Beim Aufbau der Blockcopolymere für die erfindungsgemäße Klebemassen nach dem Hauptanspruch und den Unteransprüchen ist bei der Auswahl der Monomerkombinationen darauf zu achten, dass die aus den verwendeten Monomeren hergestellten Polymerblöcke nicht vollständig miteinander mischbar sind.

Die Monomere B der erfindungsgemäßen Acrylat-Blockcopolymere - im Sinne aller Ausführungsvarianten - umfasst die Gruppe der Monomere A. In einer bevorzugten Auslegung ist das Monomer B für den Polymerblock B verschieden von dem Polymer A für den Polymerblock P(A). Für den Fall der Auslegung, dass mehrere Monomere für die Polymerblöcke P(A) oder P(B) eingesetzt werden, so sind die Monomere B verschieden von den Monomeren B oder unterscheiden sich in Ihrer Zusammensetzung von den Monomeren A. In einer weiteren bevorzugten Auslegung unterscheiden sich die eingesetzten Monomeren B von den Monomeren A durch ihre Anzahl.

### Monomere des Typs C, D und/oder F

In einer bevorzugten Vorgehensweise werden als Monomere C, D und F für die Copolymerblöcke P(A/C), P(B/D) und P(E/F) Vinylverbindungen, Acrylate und/oder Methacrylate eingesetzt, die funktionelle Gruppen tragen.
Im Falle der nicht oder wenig tackigen Klebemassen können dies bevorzugt beispielsweise Epoxy- oder Phenolgruppen sein.
Insbesondere für die tackige Ausführungsvariante können zusätzlich oder stattdessen polare Gruppen in den Monomeren vorgesehen sein, wie z.B. bevorzugt Carboxylreste, Sulfon- und/oder Phosphonsäuregruppen, Hydroxyreste, Lactam, Lacton, N-substituierte Amide, N-substituierte Amine, Carbamat-, Thiol-, Alkoxy-, Cyanreste, Ether, Halogenide.

In sehr vorteilhafter Weise für die erfindungsgemäßen hitzeaktivierbaren Klebemassen werden als Monomere C, D und F für die Copolymerblöcke P(A/C), P(B/D) und P(E/F) ein oder mehrere Monomere mit zumindest einer funktionellen Gruppe, welche sich durch die folgende allgemeinen Formel beschreiben lassen, eingesetzt.

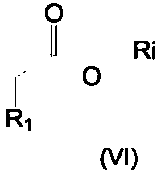

Dabei ist R₁ = H oder CH₃, der Rest R₁ = H oder ein organischer Rest, der zumindestens eine funktionelle Gruppe enthält und zwischen 1 und 30 Kohlenstoffatomen beinhaltet.

Als besonders bevorzugte Beispiele für entsprechende vinylgruppenhaltige Monomere eignen sich, insbesondere für die wenig oder nicht tackige Ausführungsvariante, z. B. Glycidylmethacrylat, und insbesondere für die tackige Variante z.B. Acrylsäure, Hydroxyethylacrylat, Hydroxypropylacrylat, Hydroxyethylmethacrylat, Hydroxypropylmethacrylat, n-Methylolacrylamid, Acrylsäure, Methacrylsäure, Allylalkohol, Maleinsäureanhydrid, Itaconsäureanhydrid, Itaconsäure, Phenoxyethylacrylat, Phenoxyethylmethacrylat, 2-Butoxyethylmethacrylat, 2-Butoxyethylacrylat, Cyanoethylmethacrylat, Cyanoethylacrylat, 6-Hydroxyhexylmethacrylat, Tetrahydrofufurylacrylat und Acrylamid.

Moderate basische Monomere C, D und F für die Copolymerblöcke P(A/C), P(B/D) und P(E/F), insbesondere im Falle der tackigen Ausführungsvariante, sind z. B. N,N-Dialkylsubstituierte Amide, wie z. B. N,N-Dimethylacrylamid, N,N-Dimethylmethylmethacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)-methacrylamid, N-Methylolacrylamid, N-(Ethoxymethyl)acrylamid, N-Isopropylacrylamid, wobei diese Aufzählung als beispielhaft anzusehen ist.

Weiterhin können als Monomere im Sinne des Typs C, D und F, insbesondere im Falle der tackigen Ausführungsvariante, für die Copolymerblöcke P(A/C), P(B/D) und P(E/F) auch Vinylphosphonsäure, Vinylsulfonsäure und das Natriumsalz der Vinylsulfonsäure vorteilhaft eingesetzt werden.
Ferner können als Monomere im Sinne des Typs C, D und F für die Copolymerblöcke P(A/C), P(B/D) und P(E/F) auch zwitterionische Monomere eingesetzt werden, auch dies ist besonders im Falle der tackigen Ausführungsvariante sehr vorteilhaft. Beispielhaft genannt sei die Gruppe der Betaine. Als Betaine eignen sich z. B. Ammoniumcarboxylate, Ammoniumphosphate und Ammoniumsulfonate. Spezielle Beispiele sind z. B. N-(3-sulfopropyl)-N-acryloxyethyl-N,N-dimethylammoniumbetain, 1-(3-Sulfopropyl)-2-vinyl-pyridiniumbetain, N-(3-Sulfopropyl)-N-allyl-N,N-dimethylammoniumbetain. Besonders bevorzugte Beispiele sind N-(3-Sulfopropyl)-N-methacryloxy-ethyl-N,N-dimethylammoniumbetain und N-(3-Sulfopropyl)-N-acryloxy-ethyl-N,N-dimethylammoniumbetain. N-(3-Sulfopropyl)-N-methacryloxy-ethyl-N,N-dimethylammoniumbetain ist kommerziell erhältlich von der Firma Raschig AG, Deutschland. Diese Aufzählung besitzt ebenfalls keinen Anspruch auf Vollständigkeit.

Als Monomere als Monomere im Sinne des Typs C, D und F für die Copolymerblöcke P(A/C), P(B/D) und P(E/F) eigenen sich, ebenfalls insbesondere für die tackige Ausführungsvariante der erfindungsgemäßen Klebemassen, weiterhin (Meth)acrylmonomere oder Vinylmonomere, die die Erweichungs-/Glasübergangstemperatur des Copolymerblocks P(A/C) - auch in Kombination mit Monomer A - bzw. des Copolymerblocks P(B/D) - auch in Kombination mit Monomer B - bzw. des Copolymerblocks P(E/F) - auch in Kombination mit Monomer E - erhöhen. Beispiele für entsprechende Monomere als Monomere C, D und F sind Methylmethacrylat, Cyclohexylmethacrylat, t-Butylacrylat, Isobornylmethacrylat, Benzylacrylat, Benzoinacrylat, acryliertes Benzophenon, Benzylmethacrylat, Benzoinmethacrylat, methacryliertes Benzophenon, Phenylacrylat, Phenylmethacrylat, t-Butylphenylacrylat, t-Butylphenylmethacrylat, 4-Biphenylacrylat, 2-Naphthylacrylat und 2-Naphthylmethacrylat, Styrol, wobei diese Aufzählung nicht abschließend ist.

Ebenfalls insbesondere günstig für die tackige Ausführungsvariante vorteilhafte Monomere im Sinne des Typs C, D und F für die Copolymerblöcke P(A/C), P(B/D) und P(E/F) sind vinylaromatische Monomere, die auch alkyliert und/oder funktionalisiert sein oder Heteroatome enthalten können, und die bevorzugt aromatische Kerne aus C₄ bis C₁₈ besitzen, umfassend insbesondere α-Methylstyrol, 4-Vinylbenzoesäure, das Natriumsalz der 4-Vinylbenzolsulfonsäure, 4-Vinylbenzylalkohol, 2-Vinylnaphthalin, 4-Vinylphenylboronsäure, 4-Vinylpyridin, Vinylsulfonsäurephenylester, 3,4-Dimethoxystyrol, Vinylbenzotrifluorid, p-Methoxystyrol, 4-Vinylanisol, 9-Vinylanthracen, 1-Vinylimidazol, 4-Ethoxystyrol, N-Vinylphthalimid, wobei diese Aufzählung keinen Anspruch auf Vollständigkeit erhebt.

### Herstellung der Blockcopolymere

Die Polymerisation zur Herstellung der Blockcopolymere kann nach einem an sich bekannten Verfahren oder in Abwandlung eines an sich bekannten Verfahrens durchgeführt werden, insbesondere durch konventionelle radikalische Polymerisation und/oder durch kontrollierte radikalische Polymerisation; letztere ist dabei durch die Anwesenheit geeigneter Kontrollreagenzien gekennzeichnet.

Zur Herstellung der Blockcopolymere können prinzipiell alle kontrolliert oder lebend verlaufenden Polymerisationen eingesetzt werden, ebenso auch Kombinationen verschiedener kontrollierter Polymerisationsverfahren. Hierbei seien z.B., ohne den Anspruch auf Vollständigkeit zu besitzen, neben der anionischen Polymerisation die ATRP, die Nitroxid/TEMPO- kontrollierte Polymerisation oder mehr bevorzugt der RAFT-Prozess genannt, also insbesondere solche Verfahren, die eine Kontrolle der Blocklängen, Polymerarchitektur oder auch, aber nicht notwendigerweise, der Taktizität der Polymerkette erlauben.

Radikalische Polymerisationen können in Gegenwart eines organischen Lösungsmittels oder in Gegenwart von Wasser oder in Gemischen aus organischen Lösungsmitteln und/oder organischer Lösungsmittel mit Wasser oder in Substanz durchgeführt werden. Bei Durchführung der Polymerisation in organischen Lösungsmitteln wird bevorzugt so wenig Lösungsmittel wie möglich eingesetzt. Die Polymerisationszeit für radikalische Prozesse beträgt - je nach Umsatz und Temperatur - typischerweise zwischen 4 und 72 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan, n-Heptan oder Cyclohexan), Ketone (wie Aceton oder Methylethylketon), Siedegrenzenbenzin, aromatische Lösungsmittel wie Toluol oder Xylol oder Gemische vorgenannter Lösungsmittel verwendet. Für die Polymerisation in wässrigen Medien beziehungsweise Gemischen aus organischen und wässrigen Lösungsmitteln werden zur Polymerisation bevorzugt Emulgatoren und/oder Stabilisatoren zugesetzt.

Findet eine Methode der radikalischen Polymerisation Anwendung, werden als Polymerisationsinitiatoren vorteilhaft übliche radikalbildende Verbindungen wie beispielsweise Peroxide, Azoverbindungen und Peroxosulfate eingesetzt. Auch Initiatorengemische eignen sich hervorragend.

Zur Radikalstabilisierung werden in günstiger Vorgehensweise Nitroxide des Typs (Vlla) oder (VIIb) eingesetzt: 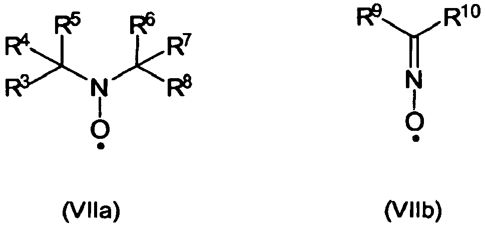 wobei R³, R⁴, R⁵, R⁶, R⁷, R⁸, R⁹, R¹⁰ unabhängig voneinander folgende Verbindungen oder Atome bedeuten:
i) Halogene, wie z.B. Chlor, Brom oder Iod
ii) lineare, verzweigte, cyclische und heterocyclische Kohlenwasserstoffreste mit 1 bis 20 Kohlenstoffatomen, die gesättigt, ungesättigt oder aromatisch sein können,
iii) Ester -COOR¹¹, Alkoxide -OR¹² und/oder Phosphonate -PO(OR¹³)₂, wobei R¹¹, R¹² oder R¹³ für Reste aus der Gruppe ii) stehen.

Verbindungen der Struktur (VIIa) oder (VIIb) können auch an Polymerketten jeglicher Art gebunden sein (vorrangig in dem Sinne, dass zumindest einer der oben genannten Reste eine derartige Polymerkette darstellt) und somit zum Aufbau der Blockcopolymere als Makroradikale oder Makroregler genutzt werden.

Sehr bevorzugt werden kontrollierte Regler für die Polymerisation von Verbindungen des Typs gewählt:
- 2,2,5,5-Tetramethyl-1-pyrrolidinyloxyl (PROXYL), 3-Carbamoyl-PROXYL, 2,2-dimethyl-4,5-cyclohexyl-PROXYL, 3-Oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphthyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

Die US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Problematisch ist die Polymerisation von Acrylaten, die nur zu sehr geringen Ausbeuten und Molmassen abläuft. Die WO 98/13392 A1 beschreibt offenkettige Alkoxyaminverbindungen, die ein symmetrisches Substitutionsmuster aufweisen. Die EP 735 052 A1 offenbart ein Verfahren zur Herstellung thermoplastischer Elastomere mit engen Molmassenverteilungen. Die WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. Die WO 98/44008 A1 offenbart spezielle Nitroxyle, die auf Morpholinen, Piperazinonen und Piperazindionen basieren. Die DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten.

Als weitere kontrollierte Polymerisations methode lässt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

In einer weiteren kontrollierten Polymerisationsmethode wird 1,1-Diphenylethylen als Kontrollreagenz verwendet. Die Herstellung von Blockcopolymeren auf diesem Weg wurde ebenfalls beschrieben (Macromol. Chem. Phys., 2001, 22, 700).

Weiterhin vorteilhaft können die erfindungsgemäß genutzten Blockcopolymere über eine anionische Polymerisation hergestellt werden. Hier werden als Reaktionsmedium bevorzugt inerte Lösungsmittel verwendet, wie z. B. aliphatische und cycloaliphatische Kohlenwasserstoffe, oder auch aromatische Kohlenwasserstoffe.

Das lebende Polymer wird im allgemeinen durch die Struktur P_{L}(A)-Me repräsentiert, wobei Me ein Metall der Gruppe I, wie z.B. Lithium, Natrium oder Kalium, und P_{L}(A) ein wachsender Polymerblock aus den Monomeren A. Die Molmasse des herzustellenden Polymerblocks wird durch das Verhältnis von Initiatorkonzentration zu Monomerkonzentration vorgegeben. Zum Aufbau der Blockstruktur werden zunächst die Monomere A für den Aufbau eines Polymerblocks P(A) hinzugegeben, dann wird anschließend durch Zugabe der Monomere B ein Polymerblock P(B) angeknüpft und nachfolgend durch erneute Zugabe von Monomeren A ein weiterer Polymerblock P(A) polymerisiert, so dass ein Triblockcopolymer P(A)-P(B)-P(A) entsteht. Alternativ kann P(A)-P(B)-M durch eine geeignete difunktionelle Verbindung gekuppelt werden. Auf diesem Weg sind auch sternförmige Multiblockcopolymere nach Formel (IV) zugänglich.

Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Seltenerdelement-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z. B. n-Butylacrylat und 2-Ethylhexylacrylat, direkt polymerisiert werden können und nicht im Polymer durch eine Umesterung mit dem entsprechenden Alkohol generiert werden müssen.

Nach der anionischen Polymerisation empfiehlt es sich zur Freisetzung von polaren Gruppen eine polymeranaloge Reaktion durchzuführen. Eine Möglichkeit zur Herstellung von mit Carbonsäuregruppen funktionalisierten Acrylatblockcopolymeren verläuft über die anionische Polymerisation von tert-Butylacrylat, wobei nach der Polymerisation die tert-Butylgruppe mit Trifluoressigsäure hydrolysiert werden kann und somit die Carbonsäuregruppe freigesetzt wird.

Als sehr bevorzugter Herstellungsprozess wird eine Variante der RAFT-Polymerisation (reversible addition-fragmentation chain transfer polymerization) durchgeführt. Der Polymerisationsprozess ist z.B. in den Schriften WO 98/01478 A1 und WO 99/31144 A1 ausführlich beschrieben. Zur Herstellung von Triblockcopolymeren eignen sich besonders vorteilhaft Trithiocarbonate der allgemeinen Struktur R"'-S-C(=S)-S-R"' (Macromolecules 2000, 33, 243-245), mittels derer in einem ersten Schritt Monomere für die Endblöcke P(A) polymerisiert werden. In einem zweiten Schritt wird anschließend der Mittelblock P(B) synthetisiert. Nach der Polymerisation der Endblöcke P(A) kann die Reaktion abgebrochen und reinitiiert werden. Ferner kann auch ohne Reaktionsunterbrechung sequentiell polymerisiert werden. In einer sehr vorteilhaften Variante werden beispielsweise die Trithiocarbonate (VIII) und (IX) oder die Thioverbindungen (X) und (XI) zur Polymerisation eingesetzt, wobei Φ ein Phenylring, der unfunktionalisiert oder durch Alkyl- oder Arylsubstituenten, die direkt oder über Ester- oder Etherbrücken angeknüpft sind, funktionalisiert sein kann, eine Cyanogruppe sein kann oder ein gesättigter oder ungesättigter aliphatischer Rest sein kann. Der Phenylring Φ kann optional einen oder mehrere Polymerblöcke tragen, entsprechend der Definition für P(A), P(B), P(A/C) und P(B/D). Funktionalisierungen können beispielsweise Halogene, Hydroxygruppen, Stickstoff- oder schwefelenthaltende Gruppen umfassen, ohne dass diese Liste Anspruch auf Vollständigkeit erhebt.

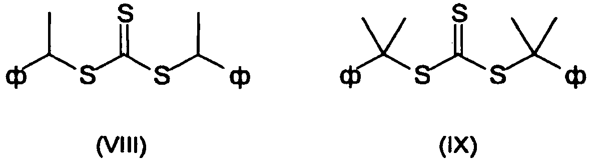

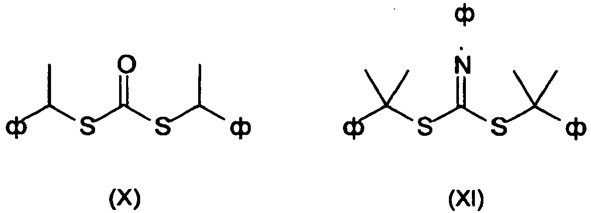

Außerdem können Thioester der allgemeinen Struktur R^{IV}-C(=S)-S-R^{V} zum Einsatz kommen, insbesondere, um asymmetrische Systeme herzustellen. Dabei können R^{IV} und R^{V} unabhängig von einander gewählt werden und R^{IV} ein Rest aus einer der folgenden Gruppen i) bis iv) und R^{IV} ein Rest aus einer der folgenden Gruppen i) bis iii) sein:
i) C₁- bis C₁₈-Alkyl, C₂- bis C₁₈ Alkenyl, C₂- bis C₁₈-Alkinyl, jeweils linear oder verzweigt; Aryl-, Phenyl-, Benzyl-, aliphatische und aromatische Heterozyklen.
ii) -NH₂, -NH-R^{VI}, -NR^{VI}R^{VII}, -NH-C(=O)-R^{VI}, -NR^{VI}-C(=O)-R^{VII}, -NH-C(=S)-R^{VI}, -NR^{VI}-C(=S)-R^{VII}, 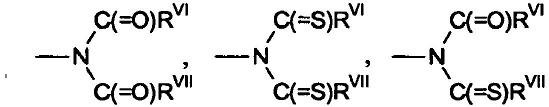 wobei R^{VI} und R^{VII} unabhängig voneinander gewählte Reste aus der Gruppe i) sind.
iii) -S-R^{VIII}, -S-C(=S)-R^{VIII}, wobei R^{VIII} ein Rest aus einer der Gruppen i) oder ii) sein kann.
iv) -O-R^{VIII}, -O-C(=O)-R^{VIII}, wobei R^{VIII} ein Rest gewählt aus einer der Gruppen i) oder ii) sein kann.

In Verbindung mit den oben genannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo- oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seinen hier genannt: Kaliumperoxodisulfat, Dibenzoylperoxid, Cumolhydroperoxid, Cydohexanonperoxid, Cyclohexylsulfonylacetylperoxid, Di-tert-butylperoxid, Azodiisobutyronitril, Diisopropylpercarbonat, tert-Butylperoctoat, Benzpinacol. In einer sehr bevorzugten Variante wird als radikalischer Initiator 1,1'-Azo-bis-(cyclohexylnitril) (Vazo 88^{®}, DuPont^{®}) oder 2,2-Azo-bis-(2-methylbutannitril) (Vazo 67^{®}, DuPont^{®}) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als hitzeaktivierbare Klebemassen und nicht als Schmelzhaftkleber einsetzen, da der hohe Anteil an Restmonomeren die klebtechnischen Eigenschaften negativ beeinflusst, die Restmonomere im Aufkonzentrationsprozess das Lösemittelrecyclat verunreinigen und die entsprechenden Selbstklebebänder ein sehr hohes Ausgasungsverhalten zeigen würden.
Erfindungsgemäß wird das Lösemittel daher bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

### Harze

Die im Rahmen dieser Erfindung beschriebenen und eingesetzen Epoxy-Harze umfassen die gesamte Gruppe der Epoxyverbindungen. So können die Epoxy-Harze Monomere, Oligomere oder Polymere sein. Polymere Epoxy-Harze können aliphatischer, cycloaliphatischer, aromatischer oder heterocyclischer Natur sein. Die Epoxy-Harze weisen bevorzugt zumindestens zwei Epoxy-Gruppen auf, die zur Vernetzung genutzt werden können.

Das Molekulargewicht der Epoxy-Harze variiert bevorzugt von 100 g/mol bis zu maximal 25.000 g/mol für polymere Epoxy-Harze.

Die Epoxy-Harze umfassen zum Beispiel das Reaktionsprodukt aus Bisphenol A und Epichlorhydrin, das Reaktionsprodukt aus Phenol und Formaldehyd (Novolak Harze) und Epichlorhydrin, Glycidyl Ester, das Reaktionsprodukt aus Epichlorhydrin und p-Amino Phenol.

Bevorzugte kommerzielle Beispiele sind z.B. Araldite™ 6010, CY-281™, ECN™ 1273, ECN™ 1280, MY 720, RD-2 von Ciba Geigy, DER™ 331, DER™ 732, DER™ 736, DEN™ 432, DEN™ 438, DEN™ 485 von Dow Chemical, Epon™ 812, 825, 826, 828, 830, 834, 836, 871, 872,1001, 1004, 1031 etc. von Shell Chemical und HPT™ 1071, HPT™ 1079 ebenfalls von Shell Chemical.

Beispiele für kommerzielle aliphatische Epoxy-Harze sind z.B. Vinylcyclohexandioxide, wie ERL-4206, ERL-4221, ERL 4201, ERL-4289 oder ERL-0400 von Union Carbide Corp.

Den erfindungsgemäßen Klebemassen können vorteilhaft weitere Harze zugesetzt sein. Geeignete Harze sind alle natürlichen und synthetischen Harze, wie etwa Kolophonium-Derivate (zum Beispiel durch Disproportionierung, Hydrierung oder Veresterung entstandene Derivate), Cumaron-Inden- und Polyterpen-Harze, aliphatische oder aromatische Kohlenwasserstoff-Harze (C-5, C-9, (C-5)₂-Harze), gemischte C-5 / C-9-Harze, hydrierte und teilhydrierte Derivate der genannten Typen, Harze aus Styrol oder α-Methylstyrol sowie Terpen-Phenolharze und weitere wie aufgeführt in Ullmanns Enzyklopädie der technischen Chemie, Band 12, S. 525 - 555 (4. Aufl.), Weinheim.

Weiterhin lassen sich als Reaktivharzkomponente auch optional Phenolharze, wie z.B. YP 50 von Toto Kasei, PKHC von Union Carbide Corp. Und BKR 2620 von Showa Union Gosei Corp. einsetzen.

Weiterhin lassen sich als Reaktivharze auch optional Polyisocyanate, wie z.B. Coronate™ L von Nippon Polyurethan Ind., Desmodur™ N3300 oder Mondur™ 489 von Bayer einsetzen.

Geeignete Harze sind alle natürlichen und synthetischen Harze, wie etwa Kolophonium-Derivate (zum Beispiel durch Disproportionierung, Hydrierung oder Veresterung entstandene Derivate), Cumaron-Inden- und Polyterpen-Harze, aliphatische oder aromatische Kohlenwasserstoff-Harze (C-5, C-9, (C-5)₂-Harze), gemischte C-5 / C-9-Harze, hydrierte und teilhydrierte Derivate der genannten Typen, Harze aus Styrol oder α-Methylstyrol sowie Terpen-Phenolharze und weitere wie aufgeführt in Ullmanns Enzyklopädie der technischen Chemie, Band 12, S. 525 - 555 (4. Aufl.), Weinheim.

Weiterhin lassen sich als Reaktivharzkomponente auch optional Phenolharze, wie z.B. YP 50 von Toto Kasei, PKHC von Union Carbide Corp. Und BKR 2620 von Showa Union Gosei Corp. einsetzen.

Weiterhin lassen sich als Reaktivharze auch optional Polyisocyanate, wie z.B. Coronate™ L von Nippon Polyurethan Ind., Desmodur™ N3300 oder Mondur™ 489 von Bayer einsetzen.

### Additive

In weiteren erfindungsgemäßen Ausführungsform enthält die hitzeaktivierbare Klebemasse weitere Rezeptierungsbestandteile, wie zum Beispiel Füllstoffe, Pigmente, rheologische Additive, Additive zur Verbesserung der Haftung, Weichmacher, Elastomere, Alterungsschutzmittel (Antioxidantien), Lichtschutzmittel, UV-Absorber sowie sonstige Hilfs- und Zusatzstoffe, wie beispielsweise Trockenmittel (zum Beispiel Molekularsieb, Zeolithe, Calciumoxid), Fließ- und Verlaufmittel, Benetzer (Tenside) oder Katalysatoren.

Als Füllstoffe können insbesondere alle feingemahlenen festen Zusatzstoffe wie zum Beispiel Kreide, Magnesiumcarbonat, Zinkcarbonat, Kaolin, Bariumsulfat, Titandioxid oder Calciumoxid eingesetzt werden. Weitere Beispiele sind Talkum, Glimmer, Kieselsäure, Silikate oder Zinkoxid. Auch Mischungen der genannten Stoffe können eingesetzt werden.

Die vorteilhaft eingesetzten Pigmente können organischer oder anorganischer Natur sein. Es kommen alle Arten organischer oder anorganischer Farbpigmente in Frage, beispielsweise Weißpigmente wie etwa Titandioxid zur Verbesserung der Licht- und UV-Stabilität, sowie Metallpigmente.

Beispiele für rheologische Additive sind pyrogene Kieselsäuren, Schichtsilikate (Bentonite), hochmolekulare Polyamidpulver oder Rhizinusölderivat-Pulver.

Additive zur Verbesserung der Haftung können zum Beispiel Stoffe aus den Gruppen der Polyamide, Epoxide oder Silane sein.

Beispiele für Weichmacher, die der Klebemasse sehr vorteilhaft zugesetzt sein können, sind Phthalsäureester, Trimellitsäureester, Phosphorsäureester, Ester der Adipinsäure sowie andere acyclische Dicarbonsäureester, Fettsäureester, Hydroxycarbonsäureester, Alkylsulfonsäureester des Phenols, aliphatische, cycloaliphatische und aromatische Mineralöle, Kohlenwasserstoffe, flüssige oder halbfeste Kautschuke (zum Beispiel Nitril- oder Polyisoprenkautschuke), flüssige oder halbfeste Polymerisate aus Buten und/oder Isobuten, Acrylsäureester, Polyvinylether, Flüssig- und Weichharze auf Basis der Rohstoffe, die auch die Basis für Klebrigmacherharze darstellen, Wollwachs und andere Wachse, Silikone sowie Polymerweichmacher wie etwa Polyester oder Polyurethane.

In einer weiteren Auslegung der Erfindung können der Klebstofffolie noch Härtersysteme zugefügt sein. Es können hier alle dem Fachmann bekannten Härter eingesetzt werden, die zu einer Reaktion mit Phenolharzen führen. In diese Kategorie fallen alle Formaldehydspender, wie z.B. Hexamethylentretraamin oder Phenolresolharze.

Für die Vernetzung mit Epoxidharzen und - sofern vorhanden - mit den Epoxyfunktionalisierten Blockcopolymeren werden z.B. di- oder multifunktionelle Hydroxyverbindungenen, di- oder multifunktionelle Isocyanate, Lewissäuren, wie z.B. Zinkchlorid oder Zinkoxid oder Zinkhydroxid, oder Dicyandiamid eingesetzt.

Zur Beschleunigung der Vernetzung und zur Erhöhung der Netzwerkdichte können weiterhin tri- oder multifunktionelle Epoxide oder Hydroxide hinzugegeben werden.

Für eine optionale Vernetzungsreaktion der FKlebemassen können weitere, vernetzungsinitiirende und/oder -fördernde Additive zugesetzt werden. Siehe hierzu weiter unten.

### Beschichtung der Klebemassen

Die hitzeaktiverbaren Klebemassen können direkt, im indirekten Transferverfahren, durch Coextrusion, aus Lösung, Dispersion oder Schmelze aufgetragen werden.

Entsprechend dem Auftragsverfahren wird das Blockcopolymer mit dem oder den Reaktivharzen abgemischt. Für die Beschichtung aus Lösung wird in bevorzugter Weise das Reaktivharz in Lösung zum Blockcopolymer hinzugegeben und eingerührt. Hierfür können die dem Fachmann bekannten Rührtechniken eingesetzt werden. Auch können zur Herstellung einer homogenen Mischung statische oder dynamische Mischaggregate eingesetzt werden.

Für die Beschichtung aus der Schmelze wird das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen. In einer bevorzugten Auslegung liegt der Restlösemittelanteil unter 1 Gew-%, sehr bevorzugt unter 0,5 Gew.-%.
Die Abmischung mit den Reaktivharzen wird in bevorzugter Weise ebenfalls in der Schmelze vorgenommen. Hierfür können Kneter oder ebenfalls Doppelschneckenextruder eingesetzt werden. Die Abmischung erfolgt bevorzugt in der Wärme, wobei die Aktivierungstemperatur zur Reaktion z.B. der Epoxy-Harze im Mischaggregat deutlich unterschritten werden sollte.

### Vernetzung

Zur optionalen Vernetzung mit UV-Licht werden den hitzeaktivierbaren Klebemassen UVabsorbierende Photoinitiatoren zugesetzt. Nützliche Photoinitiatoren, welche sehr gut zu verwenden sind, sind Benzoinether, wie z.B. Benzoinmethylether und Benzoinisopropylether, substituierte Acetophenone, wie z. B. 2,2-Diethoxyacetophenon (erhältlich als Irgacure 651^{®} von Fa. Ciba Geigy^{®}), 2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish-I (α-spaltende Photoinitiatoren, photofragmentierend) oder Norrish-II (intramolekulare Wasserstoff-Abstraktion durch eine photochemisch angeregte Gruppe) können folgenden Reste enthalten: Benzophenon-, Acetophenon-, Benzil-, Benzoin-, Hydroxyalkylphenon-, Phenylcyclohexylketon-, Anthrachinon-, Trimethylbenzoyl-phosphinoxid-, Methylthiophenylmorpholinketon-, Aminoketon-, Azobenzoin-, Thioxanthon-, Hexarylbisimidazol-, Triazin-, oder Fluorenonreste, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.

Prinzipiell ist es auch möglich, die hitzeaktivierbaren Klebemassen mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhome, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

### Verwendung der Klebemassen

Weiterhin ist Bestandteil der Erfindung die Verwendung der hitzeaktivierbaren Klebemassen als Klebstofffolien zur Verklebung von Polyimid-basierenden FPCBs oder auch auf Polyethylennaphthylat (PEN)) und Polyethylenterephthalat (PET) basierende FPCBs. In diesen Fällen wird mit der Klebststofffolie eine hohe Verklebungsfestigkeit erreicht.

Nach entsprechender Konfektionierung können Stanzlinge oder Rollen von der erfinderischen Klebstofffolie bei Raumtemperatur oder bei leicht erhöhter Temperatur auf das zu verklebende Substrat (Polyimid) aufgeklebt werden.

In einer weiteren Variante wird die Klebemasse auf einen Polyimidträger beschichtet. Solche Klebebänder können dann zur Abdeckung von Kupferleitbahnen für FPCBs eingesetzt werden.

Die zugemischten reaktiven Harze sollten bei der leicht erhöhten Temperatur noch keine chemische Reaktion eingehen. So muss die Verklebung nicht als einstufiges Verfahren erfolgen, sondern auf eines der beiden Substrate kann zunächst die Klebstofffolie angeheftet werden, indem man in der Wärme laminiert. Insbesondere für die wenig oder nicht tackigen Ausführungsvarianten geschieht dies bevorzugt unter Temperaturaktivierung.
Beim eigentlichen Heißklebeprozess mit dem zweiten Substrat (zweite Polyimidfolie des zweiten FPCBs) härtet das Harz dann ganz oder teilweise aus und die Klebstoffuge erreicht die hohe Verklebungsfestigkeit, weit oberhalb denen von konventionellen Haftklebesystemen. Insbesondere bei der wenig oder nicht tackigen Variante verläuft der Aushärtungsprozess bevorzugt oder Einbeziehung des funktionalisierten Blockcopolymers.
Die Klebstofffolie ist dementsprechend insbesondere für ein Heisspressverfahren bei Temperaturen oberhalb 80 °C, bevorzugt oberhalb 100 °C, besonders bevorzugt oberhalb 120 °C, geeignet.
Anders zu anderen Klebstofffolien, die zumeist auf reinen Epoxyharzen bestehen, weist die hitzeaktivierbare Klebstofffolie dieser Erfindung einen hohen elastischen Anteil durch den hohen Acrylatblockcopolymeranteil auf. Durch dieses zähelastische Verhalten können die flexiblen Bewegungen der FPCBs besonders gut ausgeglichen werden, so dass auch hohe Beanspruchungen und Schälbewegungen gut überstanden werden.

### Experimente

Die Erfindung wird im Folgenden beschrieben, ohne sich durch die Wahl der Beispiele unnötig beschränken zu wollen.

Folgende Testmethoden wurden angewendet.

### Prüfmethoden

### A. T-Peel Test mit FPCB

Die Klebstofffolie wird auf die Polyimidfolie des Laminates Polyimid/Kupferfolie bei 100 °C auflaminiert. Anschließend wird mit einer zweiten Polyimidfolie dieser Vorgang wiederholt und somit eine Klebfuge zwischen zwei Polyimid/Kupferfolien-Laminaten hergestellt, wobei jeweils die Polyimidfolien miteinander verklebt sind. Zur Aushärtung wird der Verbund in einer beheizbaren Presse der Fa. Bürkle bei 170 °C für 30 Minuten bei einem Druck von 50 N/cm² verpresst.
Anschließend wird mit einer Zugprüfmaschine der Fa. Zwick der Verbund im 180° Ziehwinkel mit einer Geschwindigkeit von 50 mm/min auseinander gezogen und die Kraft in N/cm gemessen. Die Messung wird bei 20°C unter 50 % Feuchtigkeit durchgeführt. Die Messwerte sind dreifach bestimmt und werden gemittelt.

### B: Lötbadbeständigkeit

Ein mit den Beispielen nach Testmethode A verklebter FPCB-Verbund wird für 10 Sekunden in ein 288°C heißes Lötbad vollständig eingetaucht. Die Verklebung gilt als Lötbadbeständig, wenn sich keine Luftblasen bilden, die die Polyimidfolie des FPCBs aufblähen lassen. Der Test gilt als nicht bestanden, wenn bereits eine leichte Blasenbildung eintritt.

### C. Gelpermeationschromatograpie (GPC)

Die Bestimmung der mittleren Molekulargewichte Mₙ (Zahlenmittel) und M_{w} (Gewichtsmittel) und der Polydispersität D erfolgte durch Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 µ, 10³ Å, ID 8,0 mm x 50 mm verwendet. Zur Auftrennung wurden die Säulen PSS-SDV, 5 µ, 10³ sowie 10⁵ und 10⁸ mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

### D. Rolling Ball Tack

Die Durchführung des Rolling-Ball Tests erfolgte in Analogie zu ASTM D3121-94. Für die Durchführung dieses Testes wurde eine Stahlkugel mit 5 mm Durchmesser eingesetzt. Die zurückgelegte Distanz der Stahlkugel wird in cm angegeben. Bei Werten oberhalb 50 cm gilt das entsprechende Klebeband nicht mehr als tackig.

### Prüfmusterherstellung

### Herstellung eines RAFT-Reglers:

Die Herstellung des Reglers Bis-2,2'-phenylethyltrithiocarbonats erfolgte ausgehend von 2-Phenylethylbromid mit Dischwefelkohlenstoff und Natriumhydroxid nach einer Vorschrift von Synth. Comm., 1988, 18 (13), 1531. Ausbeute 72 %. ¹H-NMR (CDCl₃), δ: 7,20-7,40 ppm (m, 10 H); 3,81 ppm (m, 1 H); 3,71 ppm (m, 1 H); 1,59 ppm (d, 3 H); 1,53 ppm (d, 3 H).

### Herstellung von Polystyrol (A1):

In einem für die radikalische Polymerisation konventionellem 2 L Reaktor werden unter Stickstoffatmosphäre 1500 g Styrol und 9,80 g Regler Bis-2,2'-phenylethyltrithiocarbonat vorgelegt. Es wird auf 120 °C Innentemperatur erhitzt und mit 0,1 g Vazo 67^{®} (DuPont) initiiert. Nach 24 Stunden Reaktionszeit werden 200 g Toluol hinzugegeben. Nach 36 Stunden Reaktionszeit werden weitere 200 g Toluol hizugegeben. Während der Polymerisation steigt die Viskosität merklich an. Nach 48 Stunden wird die Polymerisation abgebrochen.
Zur Aufreinigung wurde das Polymer in 4,5 Liter Methanol gefällt, über eine Fritte abfiltriert und anschließend im Vakuumtrockenschrank getrocknet.
Die Durchführung der Gelpermeationschromatographie (Test C) gegen PolystyrolStandards ergab Mₙ = 36.100 g/mol und M_{w} = 44.800 g/mol.

### Beispiel 1

Ein für radikalische Polymerisationen konventioneller Reaktor wurde mit 700 g Trithiocarbonat-funktionalisiertem Polystyrol (A1), 2900 g n-Butylacrylat, 150 g Glycidymethacrylat und 1600 g Aceton befüllt. Unter Rühren und Stickstoffgas wurde auf 65 °C Innentemperatur hochgeheizt und 0,1 g Vazo 67™ (Fa. DuPont) hinzugegeben. Der Reaktor wurde unter Rühren auf 70 °C hochgeheizt und für 24 h polymerisiert und dann mit 0,1 g Vazo 67^{®} (DuPont) nachinitiiert. Nach Beendigung der Polymerisation nach 48 h durch Abkühlung auf Raumtemperatur wurde zur Isolierung des Hotmelts in einem Vakuumtrockenschrank bei 50 °C und 10 mm Druck das Lösemittel entfernt. Die Durchführung der Gelpermeationschromatographie (Test C) gegen Polystyrolstandards ergab Mₙ = 102.700 g/mol und M_{w} = 232.000 g/mol.
Anschließend wurde das Polymer in Butanon aufgelöst (Herstellung einer 45 %-igen Lösung) und dann mit 10 Gew.-% EPR 191 (Bisphenol A Harz, 60°C Erweichungsbereich, Fa. Bakelite) und 1.5 % Dicyandiamid abgemischt und die Lösung homogenisiert. Zur Herstellung des hitzeaktivierbaren Klebebandes wird die Lösung anschließend auf ein silikonisiertes Glassine-Papier beschichtet und dann 10 Minuten bei 90°C getrocknet. Der Masseauftrag betrug 50 g/m² nach der Trocknung.

### Beispiel 2

Das Blockcopolymer aus Beispiel 1 wurde in Butanon aufgelöst (Herstellung einer 45 %-igen Lösung) und dann mit 10 Gew.-% EPR 194 (Bisphenol A Harz, 90°C Erweichungsbereich, Fa. Bakelite) und 1.5 % Dicyandiamid abgemischt und die Lösung homogenisiert. Zur Herstellung des hitzeaktivierbaren Klebebandes wird die Lösung anschließend auf ein silikonisiertes Glassine-Papier beschichtet und dann 10 Minuten bei 90°C getrocknet. Der Masseauftrag betrug 50 g/m² nach der Trocknung.

### Beispiel 3

Ein für radikalische Polymerisationen konventioneller Reaktor wurde mit 45.9 g Trithiocarbonat-funktionalisiertem Polystyrol (A1), 450 g 2-Ethylhexylacrylat, 50 g Glycidylmethacrylat und 0,12 g Vazo 67™ (Fa. DuPont) befüllt. Nach 20 Minuten Durchleiten von Argon und zweimaligen Entgasen wurde der Reaktor unter Rühren auf 70 °C hochgeheizt und für 24 h polymerisiert und dann mit 0,1 g Vazo 67^{®} (DuPont) nachinitiiert. Nach Beendigung der Polymerisation nach 48 h durch Abkühlung auf Raumtemperatur wurde zur Isolierung des Hotmelts in einem Vakuumtrockenschrank bei 50°C und 10 mm Druck das Lösemittel entfernt. Die Durchführung der Gelpermeationschromatographie (Test C) gegen Polystyrolstandards ergab Mₙ = 107.500 g/mol und Mw = 229.500 g/mol.
Anschließend wurde das Polymer in Butanon aufgelöst (Herstellung einer 45 %-igen Lösung) und dann mit 10 Gew.-% EPR 191 (Bisphenol A Harz, 60°C Erweichungsbereich, Fa. Bakelite) und 2.0 % Dicyandiamid abgemischt und die Lösung homogenisiert. Zur Herstellung des hitzeaktivierbaren Klebebandes wird die Lösung anschließend auf ein silikonisiertes Glassine-Papier beschichtet und dann 10 Minuten bei 90°C getrocknet. Der Masseauftrag betrug 50 g/m² nach der Trocknung.

### Beispiel 4

Das Blockcopolymer aus Beispiel 3 wurde in Butanon aufgelöst (Herstellung einer 45 %-igen Lösung) und dann mit 10 Gew.-% EPR 194 (Bisphenol A Harz, 90°C Erweichungsbereich, Fa. Bakelite) und 2.0 % Dicyandiamid abgemischt und die Lösung homogenisiert. Zur Herstellung des hitzeaktivierbaren Klebebandes wird die Lösung anschließend auf ein silikonisiertes Glassine-Papier beschichtet und dann 10 Minuten bei 90°C getrocknet. Der Masseauftrag betrug 50 g/m² nach der Trocknung.

### Beispiel 5

Ein für radikalische Polymerisationen konventioneller Reaktor wurde mit 700 g Trithiocarbonat-funktionalisiertem Polystyrol (A1), 3063 g n-Butylacrylat und 1600 g Aceton befüllt. Unter Rühren und Stickstoffgas wurde auf 65 °C Innentemperatur hochgeheizt und 0,1 g Vazo 67™ (Fa. DuPont) hinzugegeben. Der Reaktor wurde unter Rühren auf 70 °C hochgeheizt und für 24 h polymerisiert und dann mit 0,1 g Vazo 67^{®} (DuPont) nach initiiert. Nach Beendigung der Polymerisation nach 48 h durch Abkühlung auf Raumtemperatur wurde zur Isolierung des Hotmelts in einem Vakuumtrockenschrank bei 50 °C und 10 mm Druck das Lösemittel entfernt. Die Durchführung der Gelpermeationschromatographie (Test C) gegen Polystyrolstandards ergab Mₙ = 111.300 g/mol und M_{w} = 197.000 g/mol.
Anschließend wurde das Polymer in Butanon aufgelöst (Herstellung einer 45 %-igen Lösung) und dann mit 10 Gew.-% EPR 191 (Bisphenol A Harz, 60°C Erweichungsbereich, Fa. Bakelite), 10 Gew.-% DT 110 (Terpenphenol Harz der Fa. DRT, Erweichungsbereich 110°C) und 0.5 % Dicyandiamid abgemischt und die Lösung homogenisiert. Zur Herstellung des tackigen hitzeaktivierbaren Klebebandes wird die Lösung anschließend auf ein silikonisiertes Glassine-Papier beschichtet und dann 10 Minuten bei 90°C getrocknet. Der Masseauftrag betrug 50 g/m² nach der Trocknung.

### Beispiel 6

Das Blockcopolymer aus Beispiel 5 wurde in Butanon aufgelöst (Herstellung einer 45 %-igen Lösung) und dann mit 10 Gew.-% EPR 194 (Bisphenol A Harz, 90°C Erweichungsbereich, Fa. Bakelite), 20 Gew.-% DT 110 (Terpenphenol Harz der Fa. DRT, Erweichungsbereich 110°C) und 0.5 % Dicyandiamid abgemischt und die Lösung homogenisiert. Zur Herstellung des tackigen hitzeaktivierbaren Klebebandes wird die Lösung anschließend auf ein silikonisiertes Glassine-Papier beschichtet und dann 10 Minuten bei 90°C getrocknet. Der Masseauftrag betrug 50 g/m² nach der Trocknung.

### Beispiel 7

Ein für radikalische Polymerisationen konventioneller Reaktor wurde mit 45.9 g Trithiocarbonat-funktionalisiertem Polystyrol (A1), 460 g 2-Ethylhexylacrylat und 0,12 g Vazo 67™ (Fa. DuPont) befüllt. Nach 20 Minuten Durchleiten von Argon und zweimaligen Entgasen wurde der Reaktor unter Rühren auf 70 °C hochgeheizt und für 24 h polymerisiert und dann mit 0,1 g Vazo 67^{®} (DuPont) nachinitiiert. Nach Beendigung der Polymerisation nach 48 h durch Abkühlung auf Raumtemperatur wurde zur Isolierung des Hotmelts in einem Vakuumtrockenschrank bei 50°C und 10 mm Druck das Lösemittel entfernt. Die Durchführung der Gelpermeationschromatographie (Test C) gegen Polystyrolstandards ergab Mₙ = 94.500 g/mol und M_{w} = 189.100 g/mol.
Anschließend wurde das Polymer in Butanon aufgelöst (Herstellung einer 45 %-igen Lösung) und dann mit 10 Gew.-% EPR 191 (Bisphenol A Harz, 60°C Erweichungsbereich, Fa. Bakelite), 10 Gew.-% DT 110 (Terpenphenol Harz der Fa. DRT, Erweichungsbereich 110°C) und 0.5 % Dicyandiamid abgemischt und die Lösung homogenisiert. Zur Herstellung des tackigen hitzeaktivierbaren Klebebandes wird die Lösung anschließend auf ein silikonisiertes Glassine-Papier beschichtet und dann 10 Minuten bei 90°C getrocknet. Der Masseauftrag betrug 50 g/m² nach der Trocknung.

### Beispiel 8

Das Blockcopolymer aus Beispiel 7 wurde in Butanon aufgelöst (Herstellung einer 45 %-igen Lösung) und dann mit 10 Gew.-% EPR 194 (Bisphenol A Harz, 90°C Erweichungsbereich, Fa. Bakelite), 20 Gew.-% DT 110 (Terpenphenol Harz der Fa. DRT, Erweichungsbereich 110°C) und 0.5 % Dicyandiamid abgemischt und die Lösung homogenisiert. Zur Herstellung des hitzeaktivierbaren Klebebandes wird die Lösung anschließend auf ein silikonisiertes Glassine-Papier beschichtet und dann 10 Minuten bei 90°C getrocknet. Der Masseauftrag betrug 50 g/m² nach der Trocknung.

### Ergebnisse:

### Nicht oder wenig tackige Ausführungsvariante

Zur klebtechnischen Beurteilung der obengenannten Beispiele 1 bis 4 wurden zunächst der T-Peel-Test (Test A) mit FPCB-Laminaten durchgeführt. Die entsprechenden Messwerte sind in Tabelle 1 aufgelistet.

| Tabelle 1 | |
|---|---|
| | Test A / T-Peel Test [N/cm] |
| Beispiel 1 | 12.5 |
| Beispiel 2 | 11.8 |
| Beispiel 3 | 14.7 |
| Beispiel 4 | 13.2 |

Tabelle 1 ist zu entnehmen, dass mit den Beispielen 1 - 4 sehr hohe Verklebungsfestigkeiten bereits nach 30 Minuten Aushärtung erzielt wurden.

Ein weiteres Kriterium ist die Lötbadbeständigkeit der Materialien (Test B). Tabelle 2 kann entnommen werden, dass alle erfinderischen Beispiel lötbadbeständig sind.

| Tabelle 2 | |
|---|---|
| | Test B / Lötbadbeständigkeit |
| Beispiel 1 | Bestanden |
| Beispiel 2 | Bestanden |
| Beispiel 3 | Bestanden |
| Beispiel 4 | Bestanden |

Zur Überprüfung des Tacks der Beispiele wurde ebenfalls Rolling Ball Test (Test D) durchgeführt. Die Ergebnisse dieser Messung sind in Tabelle 3 aufgelistet.

| Tabelle 3 | |
|---|---|
| | Test D / Rolling Ball Tack [cm] |
| Beispiel 1 | >50 |
| Beispiel 2 | >50 |
| Beispiel 3 | >50 |
| Beispiel 4 | >50 |

Tabelle 3 kann entnommen werden, dass alle Beispiele 1 bis 4 keine tackigen Eigenschaften aufweisen. Zusammenfassend sind die erfinderischen hitzeaktivierbaren Klebemassen lötbadbeständig und besitzen hohe Verklebungsfestigkeiten auf Polyimid zur Verklebung sowie zur Herstellung von FPCB-Laminaten.

### Tackige Ausführungsvariante

Zur klebtechnischen Beurteilung der obengenannten Beispiele 5 bis 8 wurden zunächst wiederum der T-Peel-Test (Test A) mit FPCB-Laminaten durchgeführt. Die entsprechenden Messwerte sind in Tabelle 4 aufgelistet.

| Tabelle 4 | |
|---|---|
| | Test A / T-Peel Test [N/cm] |
| Beispiel 5 | 8.1 |
| Beispiel 6 | 9.2 |
| Beispiel 7 | 9.7 |
| Beispiel 8 | 10.2 |

Tabelle 4 ist zu entnehmen, dass mit den Beispielen 5 - 8 sehr hohe Verklebungsfestigkeiten bereits nach 30 Minuten Aushärtung erzielt wurden.

Ein weiteres Kriterium ist auch hier die Lötbadbeständigkeit der Materialien (Test B). Tabelle 5 kann entnommen werden, dass alle erfinderischen Beispiel lötbadbeständig sind.

| Tabelle 5 | |
|---|---|
| | Test B / Lötbadbeständigkeit |
| Beispiel 5 | Bestanden |
| Beispiel 6 | Bestanden |
| Beispiel 7 | Bestanden |
| Beispiel 8 | Bestanden |

Zur Überprüfung des Tacks der Beispiele wurde auch für diese Beipsiele der Rolling Ball Test (Test D) durchgeführt. Die Ergebnisse dieser Messung sind in Tabelle 6 aufgelistet.

| Tabelle 6 | |
|---|---|
| | Test D / Rolling Ball Tack [cm] |
| Beispiel 5 | 13 |
| Beispiel 6 | 9 |
| Beispiel 7 | 17 |
| Beispiel 8 | 12 |

Tabelle 6 kann entnommen werden, dass alle Beispiele 5 bis 8 tackige Eigenschaften aufweisen und der Tack mit Erhöhung des Klebharzanteils DT 110 zunimmt. Zusammenfassend weisen die erfinderischen hitzeaktivierbaren Klebemassen gemäß der Beispiele 5 bis 8 einen Tack zur Prefixierung auf, sind lötbadbeständig und besitzen hohe Verklebungsfestigkeiten auf Polyimid zur Verklebung und Herstellung von FPCB-Laminaten.

## Patentansprüche

1. Hitzeaktivierbare Klebemasse, umfassend
a) zumindest ein acrylathaltiges Blockcopolymer mit einem Anteil von 40 - 98 Gew.-%
b) ein oder mehrere klebrigmachende Epoxy- und/oder Novolak- und/oder Phenolharze mit einem Anteil von 2 - 60 Gew.-%,
**dadurch gekennzeichnet, dass**
dass das acrylathaltige Blockcopolymer durch die stöchiometrische Formel [P(A)ᵢP(B)ⱼ]ₖ (I)
beschrieben wird, worin bedeuten:
A ein oder mehrere Monomere des Typs A ,
B ein oder mehrere Monomere des Typs B,
P(A) einen Polymerblock, erhalten durch Polymerisation wenigstens eines Monomers des Typs A,
P(B) einen Polymerblock, erhalten durch Polymerisation wenigstens eines Monomeren des Typs B,
wobei als Blockcopolymere Zweiblockcopolymere nach Formel (I) mit i = j = k = 1 und/oder Dreiblockcopolymere nach Formel (I) mit i + j = 3 (i, j > 0) und k = 1 und/oder lineare und/oder sternförmige Multiblockcopolymere eingesetzt werden.

2. Hitzeaktivierbare Klebemasse nach Anspruch 1, weiterhin umfassend
c) zumindest einen Härter zur Vernetzung der Epoxy-, Novolak- und/oder Phenolharze mit einem Anteil von bis zu 10 Gew.-%, bezogen auf die Klebemasse incl. Härter.

3. Hitzeaktivierbare Klebemasse nach einem der Ansprüche 1 oder 2, **dadurch gekennzeichnet, dass**
das acrylathaltige Blockcopolymer zumindest zwei chemisch miteinander verknüpfte Polymerblöcke P(A) und P(B) enthält, welche unter Anwendungsbedingungen in wenigstens zwei mikrophasenseparierte Bereiche segregieren, wobei die mikrophasenseparierten Bereiche jeweils Erweichungstemperaturen im Bereich zwischen -125 °C und +20 °C, bevorzugt zwischen -100 °C und +20 °C, besonders bevorzugt zwischen -80 °C und +20 °C aufweisen.

4. Hitzeaktivierbare Klebemasse nach einem der vorangehenden Ansprüche, **dadurch gekennzeichnet, dass**
das Blockcopolymer eine Polymerblockabfolge des allgemeinen Typs P(A)-P(B/D) enthält, wobei
• P(A) einen Polymerblock repräsentiert, erhältlich durch Polymerisation mindestens eines Monomeren des Typs A,
wobei P(A) eine Erweichungstemperatur zwischen -125 °C und +20 °C, bevorzugt zwischen -100 °C und +20 °C, besonders bevorzugt zwischen -80 °C und +20 °C aufweist,
• P(B/D) einen Copolymerblock repräsentiert, erhältlich durch Copolymerisation mindestens eines Monomeren des Typs B und mindestens eines Monomeren des Typs D,
wobei P(B/D) eine Erweichungstemperatur zwischen -125 °C und +20 °C, bevorzugt zwischen -100 °C und +20 °C, besonders bevorzugt zwischen -80 °C und +20 °C aufweist, und wobei
die Monomere des Typs D mindestens eine funktionelle Gruppe besitzen, welche sich in einer radikalischen Copolymerisationsreaktion im wesentlichen inert verhält,
• die Polymerblöcke P(A) und P(B/D) unter Anwendungsbedingungen mikrophasensepariert vorliegen, die Polymerblöcke P(A) und P(B/D) somit unter Anwendungsbedingungen nicht vollständig (homogen) mischbar sind.

5. Hitzeaktivierbare Klebemasse nach einem der vorangegangenen Ansprüche, **dadurch gekennzeichnet, dass**
als Blockcopolymere solche des allgemeinen Typs P(B/D)-P(A/C)-P(B/D) eingesetzt werden, bestehend aus einem mittleren Polymerblock P(A/C) und zwei beidseitig an diesen angeknüpfte Polymerblöcke P(B/D), wobei
• P(B/D) und P(A/C) je einen Copolymerblock repräsentieren, P(A/C) erhältlich durch Copolymerisation wenigstens eines Monomeren vom Typ A mit wenigstens einem Monomeren des Typs C und P(B/D) erhältlich durch Copolymerisation wenigstens eines Monomeren vom Typ B mit wenigstens einem Monomeren des Typs D, wobei P(B/D) und P(A/C) jeweils eine Erweichungstemperatur zwischen -125 °C und +20 °C, bevorzugt zwischen -100 °C und +20 °C, besonders bevorzugt zwischen -80 °C und +20 °C aufweist, und wobei
die Monomere C und D mindestens eine funktionelle Gruppe besitzen, welche sich in einer radikalischen Polymerisationsreaktion im wesentlichen inert verhält,
• die Polymerblöcke P(A/C) und Polymerblöcke P(B/D) mikrophasensepariert vorliegen, die Polymerblöcke P(B/D) und P(A/C) mithin unter Anwendungsbedingungen nicht vollständig (homogen) mischbar sind.

6. Hitzeaktivierbare Klebemasse nach einem der vorangehenden Ansprüche, **dadurch gekennzeichnet, dass**
als Multiblockcopolymere eine oder mehrere Verbindungen folgenden Aufbaus eingesetzt werden:
| | | |
|---|---|---|
| (II) | [P(E₁)]-[P(E₂)]-[P(E₃)]-...- [P(Eₘ)] | mit m > 3 |
| (III) | {[P{E_{1, *δ*}-]-[P(E_{2, *δ*}-]-[P(E_{3, *δ*}-)]-...- [P(E_{n, *δ*}-)]}ₓX | mit x > 2, n > 1, |
| | | Laufzahl δ = 1, 2, ..., x |
wobei
• P(E) Polymerblöcke repräsentiert, erhältlich durch Polymerisation wenigstens eines Monomeren eines Typs E,
• (II) ein lineares Multiblockcopolymer aus m gleichen oder unterschiedlichen Polymerblöcken
• (III) ein sternförmiges Multiblockcopolymer, mit einem multifunktionellen Vernetzungsbereich X, in welchem x Polymerarme chemisch miteinander verbunden sind, wobei jeder Polymerarm aus wenigstens einem Polymerblock P(E) besteht.
• die einzelnen Polymerblöcke P(E) eine Erweichungstemperatur zwischen -125 °C und +20 °C, bevorzugt zwischen -100 °C und +20 °C, besonders bevorzugt zwischen-80 °C und +20 °C aufweisen und wobei die Monomere vom Typ C mindestens eine funktionelle Gruppe besitzen, welche sich in einer radikalischen Copolymerisationsreaktion im wesentlichen inert verhält,
• die Polymere unter Anwendungsbedingungen mikrophasensepariert vorliegen, die einzelnen Polymerblöcke somit unter Anwendungsbedingungen nicht vollständig (homogen) mischbar sind.

7. Klebemasse nach Anspruch 6, **dadurch gekennzeichnet, dass**
ein, einige oder alle der Polymerblöcke P(E) jeweils durch Polymerblöcke P(E/F) substituiert sind, erhältlich durch Copolymerisation wenigstens eines Monomeren des Typs E sowie wenigstens eines Monomeren eines zweiten Typs F.

8. Klebemasse nach einem der vorangehenden Ansprüche, **dadurch gekennzeichnet, dass** es sich um eine Haftklebemasse, bevorzugt mit tackigen Eigenschaften, handelt.

9. Verwendung einer Klebemasse nach einem der vorangehenden Ansprüche zur Verklebung und/oder Herstellung von Leiterplatten, insbesondere gedruckten und/oder flexiblen Leiterplatten, ganz besonders von flexiblen gedruckten Leiterplatten ("Flexible Printed Circuit Boards", FPCBs).

10. Verwendung nach Anspruch 9 zur Verklebung und/oder Herstellung von FPCBs auf Polyimidbasis, auf Polyethylennaphthalatbasis oder auf Polyethylenthereph-thalatbasis.

11. Verwendung der hitzeaktivierbaren Klebemasse nach einem der Ansprüche 1 bis 7 als Klebstofffolie zur Herstellung von Stanzlingen oder Rollenware.

12. Verwendung der hitzeaktivierbaren Klebemasse nach einem der Ansprüche 1 bis 7 auf einem Polyimidträger zur Abdeckung von Kupferleitbahnen für FPCBs. ,

13. Verwendung der hitzeaktivierbaren Klebemasse nach einem der Ansprüche 1 bis 7 als Klebstofffolie im Heißpressverfahren bei Temperaturen oberhalb 80 °C, bevorzugt oberhalb 100 °C, besonders bevorzugt oberhalb 120 °C.

## Claims

1. Heat-activable adhesive, comprising
a) at least one acrylate-containing block copolymer, with a fraction of 40 - 98% by weight
b) one or more tackifying epoxy and/or novolak and/or phenolic resins, with a fraction of 2 - 60% by weight,
**characterized in that**
**in that** the acrylate-containing block copolymer is described by the stoichiometric formula [P(A)ᵢP(B)ⱼ]ₖ (I),
in which
A denotes one or more monomers of type A,
B denotes one or more monomers of type B,
P(A) denotes a polymer block obtained by polymerizing at least one monomer of type A,
P(B) denotes a polymer block obtained by polymerizing at least one monomer of type B,
with diblock copolymers of formula (I) with i = j = k = 1 and/or triblock copolymers of formula (I) with i + j = 3 (i, j > 0) and k = 1 and/or linear and/or star-shaped multiblock copolymers being used as block copolymers.

2. The heat-activable adhesive according to Claim 1, further comprising
c) at least one hardener for crosslinking the epoxy, novolak and/or phenolic resins, with a fraction of up to 10% by weight based on the adhesive incl. hardener.

3. Heat-activable adhesive according to either of Claims 1 and 2, **characterized in that** the acrylate-containing block copolymer comprises at least two polymer blocks P(A) and P(B) which are linked chemically to one another and which under application conditions undergo segregation into at least two microphase-separated regions, the microphase-separated regions each having softening temperatures in the range between -125°C and +20°C, preferably between -100°C and +20°C, more preferably between -80°C and +20°C.

4. Heat-activable adhesive according to one of the preceding claims, **characterized in that** the block copolymer has a polymer block sequence of the general type P(A)-P(B/D), where
• P(A) represents a polymer block which can be obtained by polymerizing at least one monomer of type A, P(A) having a softening temperature of between -125°C and +20°C, preferably between -100°C and +20°C, more preferably between -80°C and +20°C.
• P(B/D) represents a copolymer block which can be obtained by copolymerizing at least one monomer of type B and at least one monomer of type D, P(B/D) having a softening temperature of between -125°C and +20°C, preferably between -100°C and +20°C, more preferably between -80°C and +20°C and the monomers of type D possessing at least one functional group which behaves substantially inertly in a free-radical copolymerization reaction,
• Polymer blocks P(A) and P(B/D) are in microphase-separated form under application conditions, and so the polymer blocks P(A) and P(B/D) are not completely (homogeneously) miscible under application conditions.

5. Heat-activable adhesive according to one of the preceding claims, **characterized in that** block copolymers used are those of the general type P(B/D)-P(A/C)-P(B/D), composed of a central polymer block P(A/C) and two polymer blocks P(B/D) attached to it on either side, in which
• P(B/D) and P(A/C) each represent a copolymer block, P(A/C) which can be obtained by copolymerizing at least one monomer of type A with at least one monomer of type C and P(B/D) which can be obtained by copolymerizing at least one monomer of type B with at least one monomer of type D,
P(B/D) and P(A/C) each having a softening temperature of between -125°C and +20°C, preferably between -100°C and +20°C, more preferably between -80°C and +20°C,
the monomers C and D possessing at least one functional group which behaves substantially inertly in a free-radical polymerization reaction,
• the polymer blocks P(A/C) and polymer blocks P(B/D) are in microphase-separated form, and so the polymer blocks P(B/D) and P(A/C) are not completely (homogeneously) miscible under application conditions.

6. Heat-activable adhesive according to one of the preceding claims, **characterized in that** multiblock copolymers used are one or more compounds whose structure is as follows:
(II) [P(E₁)]-[P(E₂)]-[P(E₃)]...-[P(Eₘ)]
with m > 3
(III) {[P(E_{1, δ}-]-[P(E_{2, δ}-]-[P(E_{3, δ}-)]-...-[P(E_{n, δ}-)]}ₓX with x > 2, n > 1,
serial number
δ = 1, 2, ..., x
where
• P(E) represents polymer blocks which can be obtained by polymerizing at least one monomer of a type E,
• (II) a linear multiblock copolymer composed of m identical or different polymer blocks
• (III) a star-shaped multiblock copolymer with a polyfunctional crosslinking region X, in which x polymer arms are joined to one another chemically, each polymer arm is composed of at least one polymer block P(E).
• The individual polymer blocks P(E) have a softening temperature of between -125 and +20°C, preferably between -100 and +20°C, more preferably between -80 and +20°C and the monomers of type C possessing at least one functional group which behaves substantially inertly in a free-radical copolymerization reaction,
• the polymers are in microphase-separated form under application conditions, and so the individual polymer blocks are not completely (homogeneously) miscible under application conditions.

7. Adhesive according to Claim 6, **characterized in that** one, some or all of the polymer blocks P(E) are each substituted by polymer blocks P(E/F), obtainable by copolymerizing at least one monomer of type E and also at least one monomer of a second type F.

8. Adhesive according to one of the preceding claims, **characterized in that** it is a contact adhesive, preferably having tacky properties.

9. Use of an adhesive according to one of the preceding claims for bonding and/or fabricating circuit boards, especially printed and/or flexible circuit boards, most particularly flexible printed circuit boards (FPCBs).

10. Use according to Claim 9 for bonding and/or fabricating FPCBs based on polyimide, based on polyethylene naphthalate or based on polyethylene terephthalate.

11. Use of the heat-activable adhesive according to one of Claims 1 to 7 as an adhesive sheet for producing diecuts or roll products.

12. Use of the heat-activable adhesive according to one of Claims 1 to 7 on a polyimide backing for masking copper conductor tracks for FPCBs.

13. Use of the heat-activable adhesive according to one of Claims 1 to 7 as an adhesive sheet in a hot press process at temperatures above 80°C, preferably above 100°C, more preferably above 120°C.

## Revendications

1. Masse adhésive thermoactivable comprenant :
a) au moins un copolymère séquencé contenant de l'acrylate en une proportion de 40 à 98 % en poids,
b) une ou plusieurs résines époxy et/ou novolaques et/ou phénol collantes en une proportion de 2 à 60 % en poids,
**caractérisée en ce que**
le copolymère séquencé contenant de l'acrylate est décrit par la formule stoechiométrique
[P(A)ᵢP(B)ⱼ]ₖ (I)
dans laquelle :
A signifie un ou plusieurs monomères de type A,
B signifie un ou plusieurs monomères de type B,
P(A) signifie une séquence polymère obtenue par polymérisation d'au moins un monomère de type A,
P(B) signifie une séquence polymère obtenue par polymérisation d'au moins un monomère de type B,
des copolymères biséquencés de formule (I) avec i = j = k = 1 et/ou des copolymères triséquencés de formule (I) avec i + j = 3 (i·j > 0) et k = 1 et/ou des copolymères multiséquencés linéaires et/ou en étoile étant utilisés en tant que copolymères séquencés.

2. Masse adhésive thermoactivable selon la revendication 1, comprenant en outre :
c) au moins un durcisseur pour la réticulation des résines époxy, novolaques et/ou phénol en une proportion de jusqu'à 10 % en poids, par rapport à la masse adhésive y compris le durcisseur.

3. Masse adhésive thermoactivable selon l'une quelconque des revendications 1 ou 2, **caractérisée en ce que** le copolymère séquencé contenant de l'acrylate contient au moins deux séquences polymères P(A) et P(B) reliées chimiquement l'une avec l'autre, qui sont ségréguées en au moins deux zones séparées en microphases dans les conditions d'utilisation, les zones séparées en microphases présentant chacune des températures de ramollissement dans la plage comprise entre -125 °C et +20 °C, de préférence entre -100 °C et +20 °C, de manière particulièrement préférée entre-80 °C et +20 °C.

4. Masse adhésive thermoactivable selon l'une quelconque des revendications précédentes, **caractérisée en ce que** le copolymère séquencé contient une suite de séquences polymères de type général P(A)-P(B/D),
- P(A) représentant une séquence polymère pouvant être obtenue par polymérisation d'au moins un monomère de type A,
P(A) présentant une température de ramollissement comprise entre -125 °C et +20 °C, de préférence entre-100 °C et +20 °C, de manière particulièrement préférée entre -80 °C et +20 °C,
- P(B/D) représentant une séquence copolymère pouvant être obtenue par copolymérisation d'au moins un monomère de type B et d'au moins un monomère de type D,
P(B/D) présentant une température de ramollissement comprise entre -125 °C et +20 °C, de préférence entre -100 °C et +20 °C, de manière particulièrement préférée entre -80 °C et +20 °C, et
les monomères de type D comprenant au moins un groupe fonctionnel qui se comporte de manière essentiellement inerte dans une réaction de copolymérisation radicalaire,
- les séquences polymères P(A) et P(B/D) se présentant sous forme séparée en microphases dans les conditions d'utilisation, les séquences polymères P(A) et P(B/D) n'étant par conséquent pas entièrement mélangeables (de manière homogène) dans les conditions d'utilisation.

5. Masse adhésive thermoactivable selon l'une quelconque des revendications précédentes, **caractérisée en ce que** des copolymères séquencés de type général P(B/D)-P(A/C)-P(B/D) sont utilisés en tant que copolymères séquencés, constitués d'une séquence polymère centrale P(A/C) et de deux séquences polymères P(B/D) reliées latéralement à celle-ci,
- P(B/D) et P(A/C) représentant chacun une séquence copolymère, P(A/C) pouvant être obtenu par copolymérisation d'au moins un monomère de type A avec au moins un monomère de type C et P (B/D) pouvant être obtenu par copolymérisation d'au moins un monomère de type B avec au moins un monomère de type D,
P(B/D) et P(A/C) présentant chacun une température de ramollissement comprise entre -125 °C et +20 °C, de préférence entre -100 °C et +20 °C, de manière particulièrement préférée entre -80 °C et +20 °C, et
les monomères C et D comprenant au moins un groupe fonctionnel qui se comporte de manière essentiellement inerte dans une réaction de polymérisation radicalaire,
- les séquences polymères P(A/C) et les séquences polymères P(B/D) se présentant sous forme séparée en microphases, les séquences polymères P(B/D) et P(A/C) n'étant donc pas entièrement mélangeables (de manière homogène) dans les conditions d'utilisation.

6. Masse adhésive thermoactivable selon l'une quelconque des revendications précédentes, **caractérisée en ce qu'**un ou plusieurs composés de la structure suivante sont utilisés en tant que copolymères multiséquencés :
(II) [P(E₁)]-[P(E₂)]-[P(E₃)]-...-[P(Eₘ)] avec m > 3
(III) {[P(E_{1, δ})]-[P(E_{2, δ})]-[P(E_{3, δ})]-...-[P(E_{n, δ})]}ₓX avec x > 2, n > 1, incrémentation δ = 1, 2,..., x,
- P(E) représentant des séquences polymères pouvant être obtenues par polymérisation d'au moins un monomère de type E,
- (II) représentant un copolymère multiséquencé linéaire de m séquences polymères identiques ou différentes,
- (III) représentant un copolymère multiséquencé en forme d'étoile, comprenant une zone de réticulation multifonctionnelle X, dans laquelle x branches polymères sont reliées chimiquement les unes avec les autres, chaque branche polymère étant constituée d'au moins une séquence polymère P(E),
- les séquences polymères P(E) individuelles présentant une température de ramollissement comprise entre -125 °C et +20 °C, de préférence entre -100 °C et +20 °C, de manière particulièrement préférée entre-80 °C et +20 °C, et les monomères de type C comprenant au moins un groupe fonctionnel qui se comporte de manière essentiellement inerte dans une réaction de copolymérisation radicalaire,
- les polymères se présentant sous forme séparée en microphases dans les conditions d'utilisation, les séquences polymères individuelles n'étant par conséquent pas entièrement mélangeables (de manière homogène) dans les conditions d'utilisation.

7. Masse adhésive selon la revendication 6, **caractérisée en ce qu'**une, certaines ou toutes les séquences polymères P(E) sont chacune substituées par des séquences polymères P(E/F), pouvant être obtenues par copolymérisation d'au moins un monomère de type E et d'au moins un monomère d'un second type F.

8. Masse adhésive selon l'une quelconque des revendications précédentes, **caractérisée en ce qu'**il s'agit d'une masse adhésive de contact, de préférence à propriétés collantes.

9. Utilisation d'une masse adhésive selon l'une quelconque des revendications précédentes pour le collage et/ou la fabrication de cartes de circuits, notamment de cartes de circuits imprimés et/ou souples, tout particulièrement de cartes de circuits imprimés souples (« Flexible Printed Circuit Boards », FPCB).

10. Utilisation selon la revendication 9 pour le collage et/ou la fabrication de FPCB à base de polyimide, à base de polyéthylène naphtalate ou base de polyéthylène téréphtalate.

11. Utilisation de la masse adhésive thermoactivable selon l'une quelconque des revendications 1 à 7 en tant que feuille adhésive pour la fabrication d'articles découpés ou de rouleaux.

12. Utilisation de la masse adhésive thermoactivable selon l'une quelconque des revendications 1 à 7 sur un support en polyimide pour le recouvrement d'interconnexions en cuivre pour FPCB.

13. Utilisation de la masse adhésive thermoactivable selon l'une quelconque des revendications 1 à 7 en tant que feuille adhésive dans le procédé de compression à chaud à des températures supérieures à 80 °C, de préférence supérieures à 100 °C, de manière particulièrement préférée supérieures à 120 °C.
